(19) Europäisches Patentamt
European Patent Office
Office européen des brevets

(11) EP 4 361 196 A1

(12) # EUROPEAN PATENT APPLICATION
published in accordance with Art. 153(4) EPC

(43) Date of publication:
**01.05.2024 Bulletin 2024/18**

(21) Application number: **22828284.4**

(22) Date of filing: **15.06.2022**

(51) International Patent Classification (IPC):
***C08G 64/02*** *(2006.01)* ***C08G 85/00*** *(2006.01)*
***C08K 5/06*** *(2006.01)* ***C08L 101/00*** *(2006.01)*
***C08G 63/66*** *(2006.01)* ***G02B 1/04*** *(2006.01)*

(52) Cooperative Patent Classification (CPC):
**C08G 63/66; C08G 64/02; C08G 85/00; C08K 5/06; C08L 101/00; G02B 1/04**

(86) International application number:
**PCT/JP2022/023882**

(87) International publication number:
**WO 2022/270367 (29.12.2022 Gazette 2022/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.06.2021 JP 2021103298**

(71) Applicant: **MITSUBISHI GAS CHEMICAL COMPANY, INC.**
**Chiyoda-ku**
**Tokyo 100-8324 (JP)**

(72) Inventors:
- **KATO, Noriyuki**
  **Tokyo 100-8324 (JP)**
- **NISHIMORI, Katsushi**
  **Tokyo 125-8601 (JP)**
- **IKEDA, Shinya**
  **Niigata-shi, Niigata 950-3121 (JP)**
- **MOTEGI, Atsushi**
  **Tokyo 125-8601 (JP)**
- **ISHIHARA, Kentaro**
  **Tokyo 100-8324 (JP)**
- **MURATA SUZUKI, Shoko**
  **Tokyo 125-8601 (JP)**
- **OGATA, Tatsunobu**
  **Tokyo 125-8601 (JP)**

(74) Representative: **Hoffmann Eitle**
**Patent- und Rechtsanwälte PartmbB**
**Arabellastraße 30**
**81925 München (DE)**

(54) **THERMOPLASTIC RESIN AND OPTICAL LENS INCLUDING SAME**

(57) According to the present invention, there can be provided a thermoplastic resin comprising a constituent unit (A) derived from a monomer represented by the following general formula (1):

EP 4 361 196 A1

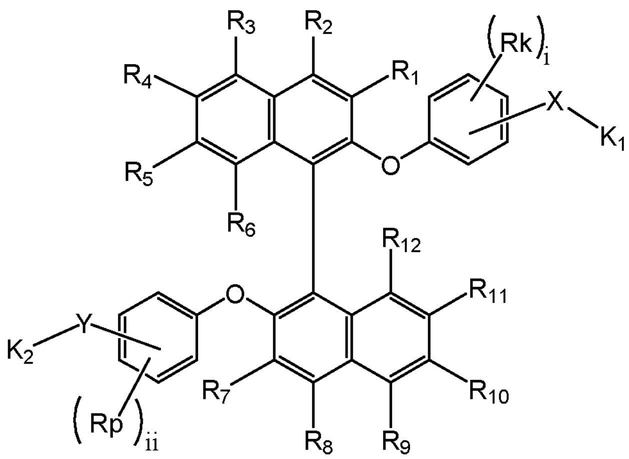

(1)

wherein

$R_1$ to $R_{12}$, Rk, and Rp each independently represent a hydrogen atom, a fluorine atom, a chlorine atom, a bromine atom, an iodine atom, a cycloalkyl group containing 5 to 20 carbon atoms, a cycloalkoxyl group containing 5 to 20 carbon atoms, an aryl group containing 6 to 20 carbon atoms, a linear or branched alkyl group containing 1 to 10 carbon atoms, an alkenyl group containing 2 to 10 carbon atoms, an alkoxy group containing 1 to 10 carbon atoms, a heteroaryl group containing 6 to 20 carbon atoms, which comprises one or more heterocyclic atoms selected from O, N and S, or an aralkyl group containing 7 to 20 carbon atoms, and

X and Y represent a single bond or an alkylene group containing 1 to 5 carbon atoms, i and ii each independently represent an integer of 0 to 4, and $K_1$ and $K_2$ each independently represent -OH, -COOH, or - COORq, wherein Rq represents an alkyl group containing 1 to 5 carbon atoms.

**Description**

Technical Field

The present invention relates to a thermoplastic resin and an optical lens comprising the same. More specifically, the present invention relates to a polycarbonate resin, a polyester resin or a polyester carbonate resin, and an optical lens comprising the same.

Background Art

As materials for optical lenses used in the optical systems of various types of cameras such as a camera, a film-integrated camera and a video camera, optical glasses or optical resins have been used. Such optical glasses are excellent in heat resistance, transparency, dimensional stability, chemical resistance and the like. However, the optical glasses are problematic in terms of high material costs, poor formability and low productivity.
On the other hand, an optical lens consisting of an optical resin is advantageous in that it can be produced in a large amount by injection molding, and as materials having a high refractive index for use in camera lenses, polycarbonate, polyester carbonate, and polyester resins, etc. have been used.
When such an optical resin is used as an optical lens, the used optical resin is required to have heat resistance, transparency, low water absorbability, chemical resistance, low birefringence, moist-heat resistance, etc., in addition to optical properties such as refractive index and Abbe number. In particular, in recent years, optical lenses having high refractive index and high heat resistance have been required, and thus, various resins have been developed (Patent Literatures 1 to 5).
Moreover, a thermoplastic resin made from 2,2'-bis(2-hydroxyethoxy)-1,1'-binaphthalene as a raw material has excellent optical properties and is useful as a material for various types of optical applications (Patent Literature 6). However, due to various molding processes and the expansion of usage environments, further improvement of heat resistance without impairing optical properties has been required.

Citation List

Patent Literature

Patent Literature 1: JP Patent Publication (Kokai) No. 2018-2893 A
Patent Literature 2: JP Patent Publication (Kokai) No. 2018-2894 A
Patent Literature 3: JP Patent Publication (Kokai) No. 2018-2895 A
Patent Literature 4: JP Patent Publication (Kokai) No. 2018-59074 A
Patent Literature 5: International Publication WO2017/078073
Patent Literature 6: International Publication WO2014/073496

Summary of Invention

Technical Problem

It is an object of the present invention to provide a thermoplastic resin that is excellent in optical properties such as refractive index and Abbe number and is also excellent in heat resistance, and an optical lens using the same.

Solution to Problem

As a result of intensive studies directed towards solving the conventional problem, the present inventors have found that a thermoplastic resin that is excellent in optical properties such as refractive index and Abbe number and is also excellent in heat resistance can be obtained by using a raw material, in which an aromatic ring is introduced into a diol compound having a binaphthalene structure, thereby completing the present invention.
Specifically, the present invention includes the following aspects.

< 1 > A thermoplastic resin, comprising a constituent unit (A) derived from a monomer represented by the following general formula (1):

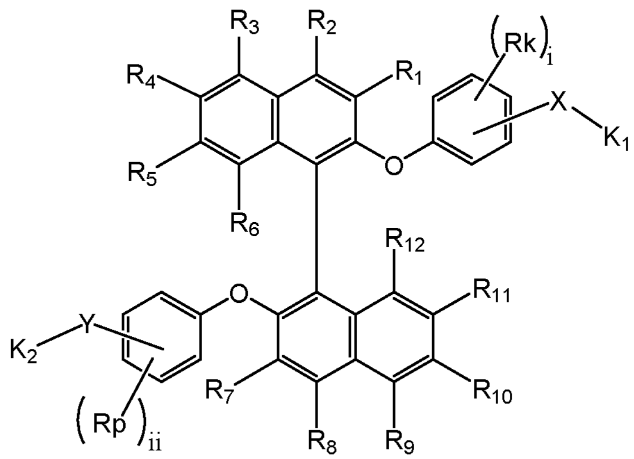

(1)

wherein

$R_1$ to $R_{12}$, Rk, and Rp each independently represent a hydrogen atom, a fluorine atom, a chlorine atom, a bromine atom, an iodine atom, a cycloalkyl group containing 5 to 20 carbon atoms, a cycloalkoxyl group containing 5 to 20 carbon atoms, an aryl group containing 6 to 20 carbon atoms, a linear or branched alkyl group containing 1 to 10 carbon atoms, an alkenyl group containing 2 to 10 carbon atoms, an alkoxy group containing 1 to 10 carbon atoms, a heteroaryl group containing 6 to 20 carbon atoms, which comprises one or more heterocyclic atoms selected from O, N and S, or an aralkyl group containing 7 to 20 carbon atoms, and
X and Y represent a single bond or an alkylene group containing 1 to 5 carbon atoms, i and ii each independently represent an integer of 0 to 4, and $K_1$ and $K_2$ each independently represent -OH, -COOH, or - COORq, wherein Rq represents an alkyl group containing 1 to 5 carbon atoms.

< 2 > The thermoplastic resin according to the above < 1 >, which is a polycarbonate resin, a polyester resin or a polyester carbonate resin.
< 3 > The thermoplastic resin according to the above < 1 > or < 2 >, wherein, in the general formula (1), $R_1$ to $R_{12}$, Rk, and Rp represent a hydrogen atom, X and Y represent a methylene group, and $K_1$ and $K_2$ represent -OH.
< 4 > The thermoplastic resin according to the above < 1 > or < 2 >, wherein, in the general formula (1), $R_1$ to $R_{12}$, Rk, and Rp represent a hydrogen atom, X and Y represent a single bond, and $K_1$ and $K_2$ represent -COOH or -COORq, wherein Rq represents an alkyl group containing 1 to 5 carbon atoms.
< 5 > The thermoplastic resin according to any one of the above < 1 > to < 4 >, which comprises a constituent unit (B) derived from a monomer represented by the following general formula (2) and/or a constituent unit (C) derived from a monomer represented by the following general formula (3):

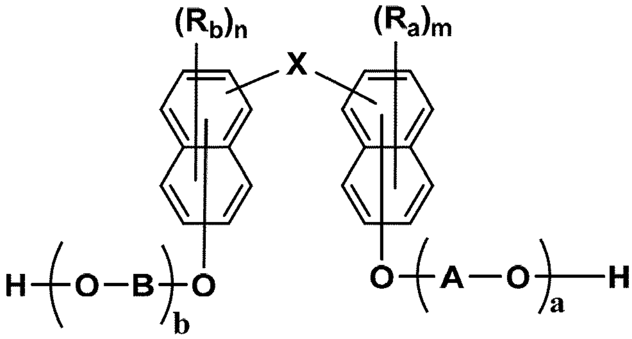

(2)

wherein

$R_a$ and $R_b$ are each independently selected from the group consisting of a hydrogen atom, a halogen atom, an alkyl group containing 1 to 20 carbon atoms and optionally having a substituent, an alkoxyl group containing 1 to 20 carbon atoms and optionally having a substituent, a cycloalkyl group containing 5 to 20 carbon atoms and optionally having a substituent, a cycloalkoxyl group containing 5 to 20 carbon atoms and optionally having a

substituent, an aryl group containing 6 to 20 carbon atoms and optionally having a substituent, a heteroaryl group containing 6 to 20 carbon atoms and optionally having a substituent, which comprises one or more heterocyclic atoms selected from O, N and S, an aryloxy group containing 6 to 20 carbon atoms and optionally having a substituent, and $-C{\equiv}C-R_h$,

$R_h$ represents an aryl group containing 6 to 20 carbon atoms and optionally having a substituent, or a heteroaryl group containing 6 to 20 carbon atoms and optionally having a substituent, which comprises one or more heterocyclic atoms selected from O, N and S,

X represents a single bond or a fluorene group optionally having a substituent,

A and B each independently represent an alkylene group containing 1 to 5 carbon atoms and optionally having a substituent,

m and n each independently represent an integer of 0 to 6, and

a and b each independently represent an integer of 0 to 10; and/or

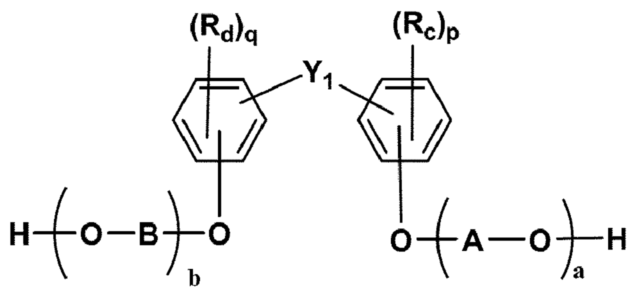
(3)

wherein

$R_c$ and $R_d$ are each independently selected from the group consisting of a hydrogen atom, a halogen atom, an alkyl group containing 1 to 20 carbon atoms and optionally having a substituent, an alkoxyl group containing 1 to 20 carbon atoms and optionally having a substituent, a cycloalkyl group containing 5 to 20 carbon atoms and optionally having a substituent, a cycloalkoxyl group containing 5 to 20 carbon atoms and optionally having a substituent, and an aryl group containing 6 to 20 carbon atoms and optionally having a substituent,

$Y_1$ represents a single bond, a fluorene group optionally having a substituent, or any one of the structural formulae represented by the following formulae (4) to (11):

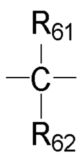
(4)

$-S-$
(5)

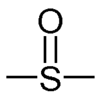
(6)

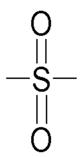
(7)

$-(CH_2)_r-$
(8)

$-O-$
(9)

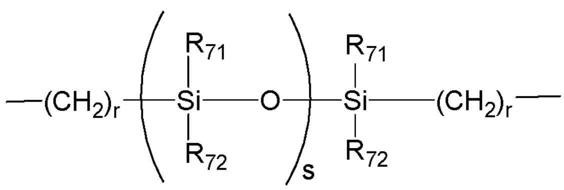
(10)

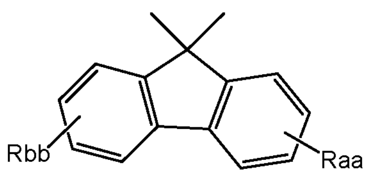
(11)

(wherein, in the formulae (4) to (11),

$R_{61}$, $R_{62}$, $R_{71}$, and $R_{72}$ each independently represent a hydrogen atom, a halogen atom, an alkyl group containing 1 to 20 carbon atoms and optionally having a substituent, or an aryl group containing 6 to 30 carbon atoms and optionally having a substituent, or represent a C1-C20 carbon ring or heterocyclic ring optionally having a substituent, which is formed as a result that $R_{61}$ and $R_{62}$, or $R_{71}$ and $R_{72}$ bind to each other,

$R_{aa}$ and $R_{bb}$ are the same as $R_a$ and $R_b$ in the general formula (2), and

r and s each independently represent an integer of 0 to 5000),

A and B each independently represent an alkylene group containing 1 to 5 carbon atoms and optionally having

a substituent,
p and q each independently represent an integer of 0 to 4, and
a and b each independently represent an integer of 0 to 10.

< 6 > The thermoplastic resin according to the above < 5 >, which comprises a constituent unit derived from any one of, at least, BPEF, BNE, BNEF, and DPBHBNA.

< 7 > The thermoplastic resin according to any one of the above < 1 > to < 6 >, which further comprises a constituent unit derived from at least one monomer selected from the following monomer group:

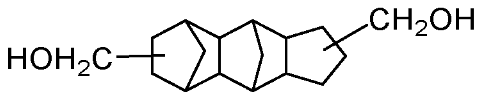
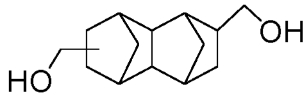

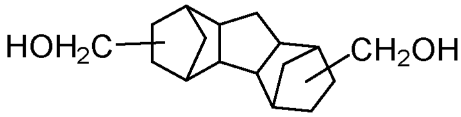
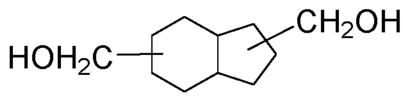

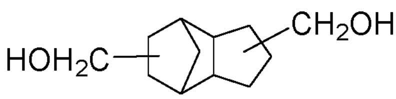
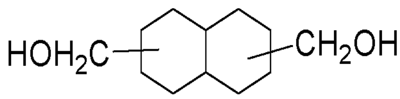

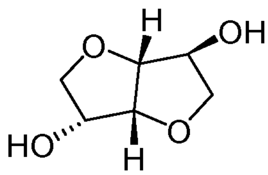
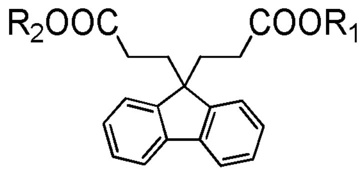

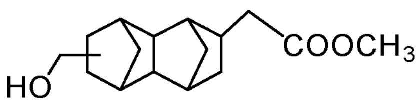
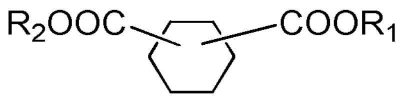

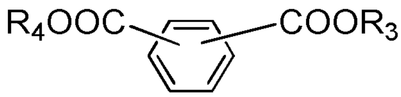
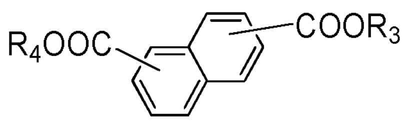

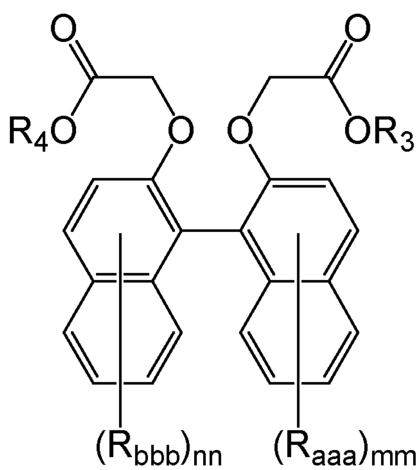

wherein, in the formulae, $R_1$ and $R_2$ each independently represent a hydrogen atom, a methyl group or an ethyl

group, and $R_3$ and $R_4$ each independently represent a hydrogen atom, a methyl group, an ethyl group, or alkylene glycol containing 2 to 5 carbon atoms; and $R_{aaa}$ and $R_{bbb}$ each independently represent a hydrogen atom, a halogen atom, an alkyl group containing 1 to 20 carbon atoms and optionally having a substituent, an alkoxyl group containing 1 to 20 carbon atoms and optionally having a substituent, a cycloalkyl group containing 5 to 20 carbon atoms and optionally having a substituent, a cycloalkoxyl group containing 5 to 20 carbon atoms and optionally having a substituent, an aryl group containing 6 to 20 carbon atoms and optionally having a substituent, a heteroaryl group containing 6 to 20 carbon atoms and optionally having a substituent, which comprises one or more heterocyclic atoms selected from O, N and S, an aryloxy group containing 6 to 20 carbon atoms and optionally having a substituent, and -C=C-$R_h$, and mm and nn each independently represent an integer of 0 to 6.

< 8 > The thermoplastic resin according to any one of the above < 1 > to < 7 >, which has a polystyrene-converted weight average molecular weight (Mw) of 10,000 to 200,000.

< 9 > The thermoplastic resin according to any one of the above < 1 > to < 8 >, which has a refractive index (nD) of 1.64 to 1.70.

< 10 > The thermoplastic resin according to any one of the above < 1 > to < 9 >, which has an Abbe number (ν) of 15.0 to 26.0.

< 11 > The thermoplastic resin according to any one of the above < 1 > to < 10 >, which has a glass transition temperature of 130°C to 180°C.

< 12 > A thermoplastic resin composition, comprising a modifier represented by the following general formula (1) and a thermoplastic resin:

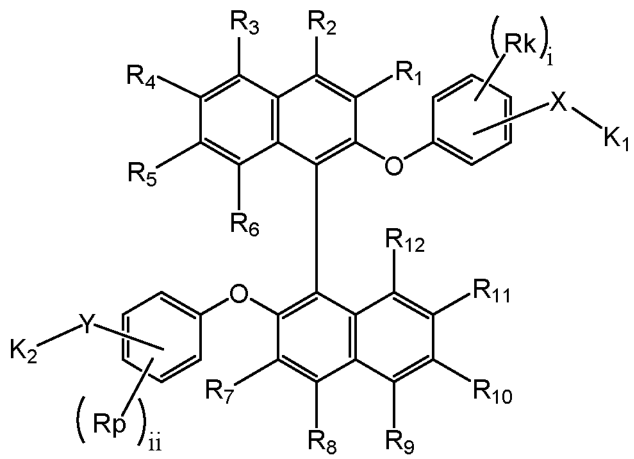

(1)

wherein

$R_1$ to $R_{12}$, Rk, and Rp each independently represent a hydrogen atom, a fluorine atom, a chlorine atom, a bromine atom, an iodine atom, a cycloalkyl group containing 5 to 20 carbon atoms, a cycloalkoxyl group containing 5 to 20 carbon atoms, an aryl group containing 6 to 20 carbon atoms, a linear or branched alkyl group containing 1 to 10 carbon atoms, an alkenyl group containing 2 to 10 carbon atoms, an alkoxy group containing 1 to 10 carbon atoms, a heteroaryl group containing 6 to 20 carbon atoms, which comprises one or more heterocyclic atoms selected from O, N and S, or an aralkyl group containing 7 to 20 carbon atoms, and

X and Y represent a single bond or an alkylene group containing 1 to 5 carbon atoms, i and ii each independently represent an integer of 0 to 4, and $K_1$ and $K_2$ each independently represent -OH, -COOH, or - COORq, wherein Rq represents an alkyl group containing 1 to 5 carbon atoms.

< 13 > An optical member, comprising the thermoplastic resin according to any one of the above < 1 > to < 11 > or the thermoplastic resin composition according to the above < 12 >.

< 14 > An optical lens, comprising the thermoplastic resin according to any one of the above < 1 > to < 11 > or the thermoplastic resin composition according to the above < 12 >.

< 15 > An optical film, comprising the thermoplastic resin according to any one of the above < 1 > to < 11 > or the thermoplastic resin composition according to the above < 12 >.

Advantageous Effects of Invention

According to the present invention, there can be provided: a thermoplastic resin that is excellent in optical

properties such as refractive index and Abbe number and is also excellent in heat resistance; and an optical lens comprising the same.

Description of Embodiments

Hereinafter, the present invention will be described in detail by exemplifying Synthetic Examples, Examples, and the like, but the present invention is not limited to the exemplified Synthetic Examples, Examples, and the like. The methods described below can be changed to any methods within a range that does not greatly deviate from the contents of the present invention.

< Thermoplastic resin >

One embodiment of the present invention relates to a thermoplastic resin comprising a constituent unit (A) derived from a monomer represented by the following general formula (1):

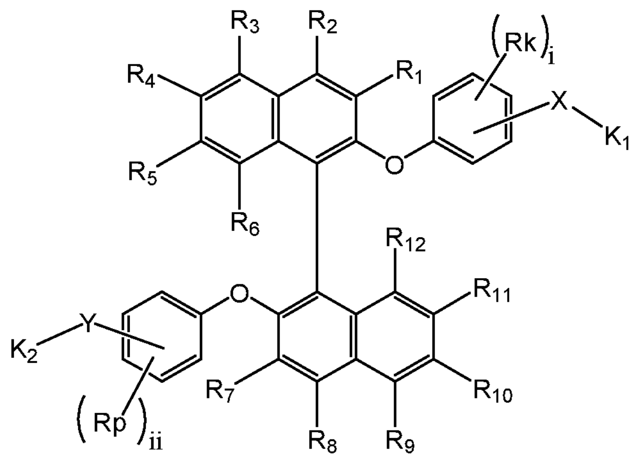

(1)

wherein

$R_1$ to $R_{12}$, Rk, and Rp each independently represent a hydrogen atom, a fluorine atom, a chlorine atom, a bromine atom, an iodine atom, a cycloalkyl group containing 5 to 20 (preferably 5 to 10, more preferably 6 to 8) carbon atoms, a cycloalkoxyl group containing 5 to 20 (preferably 5 to 10) carbon atoms, an aryl group containing 6 to 20 (preferably 6 to 12, more preferably 6 to 10) carbon atoms, a linear or branched alkyl group containing 1 to 10 (preferably 1 to 4, more preferably 1 to 3, particularly preferably 1 or 2) carbon atoms, an alkenyl group containing 2 to 10 (preferably 2 to 5) carbon atoms, an alkoxy group containing 1 to 10 (preferably 1 to 5) carbon atoms, a heteroaryl group containing 6 to 20 (preferably 6 to 15, more preferably 6 to 12, particularly preferably 6 to 10) carbon atoms, which comprises one or more heterocyclic atoms selected from O, N and S, or an aralkyl group containing 7 to 20 (preferably 7 to 10) carbon atoms.

In the above general formula (1), preferably, $R_1$ to $R_{12}$, Rk, and Rp each independently represent a hydrogen atom, a methyl group, or a phenyl group, and more preferably, all of $R_1$ to $R_{12}$, Rk, and Rp represent hydrogen atoms.

In the above general formula (1), X and Y represent a single bond or an alkylene group containing 1 to 5 (preferably 1 to 3) carbon atoms, preferably represent a single bond, a methylene group or an ethylene group, and more preferably represent a single bond or a methylene group.

In the above general formula (1), i and ii each independently represent an integer of 0 to 4, and preferably represent an integer of 0 to 2.

In the above general formula (1), $K_1$ and $K_2$ each independently represent -OH, -COOH, or -COORq, and herein, Rq represents an alkyl group containing 1 to 5 (preferably 1 to 3) carbon atoms. Rq preferably represents a methyl group, an ethyl group or a propyl group, and more preferably represents a methyl group.

In one embodiment of the present invention, an aspect, wherein, in the general formula (1), $R_1$ to $R_{12}$, Rk, and Rp each represent a hydrogen atom, X and Y represent a methylene group, and $K_1$ and $K_2$ represent -OH, is preferable.

In addition, an aspect, wherein, in the general formula (1), $R_1$ to $R_{12}$, Rk, and Rp each represent a hydrogen atom, X and Y represent a single bond, and $K_1$ and $K_2$ represent -COOH or -COORq, wherein Rq represents an alkyl group containing 1 to 5 (preferably 1 to 3) carbon atoms, is also preferable.

Particularly preferred specific compounds as monomers represented by the general formula (1) are shown below, but the present invention is not limited to these compounds.

(([1,1'-Binaphthalene]-2,2'-diylbis(oxy))bis(4,1-phenylene))dimethanol

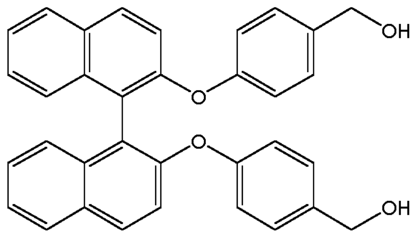

(([1,1'-Binaphthalene]-2,2'-diylbis(oxy))bis(3,1-phenylene))dimethanol

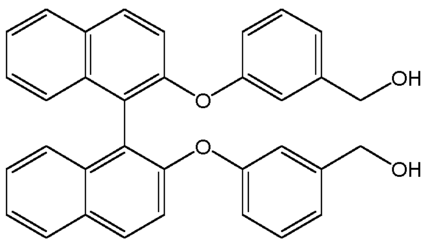

4,4'-([1,1'-Binaphthalene]-2,2'-diylbis(oxy))dibenzoic acid

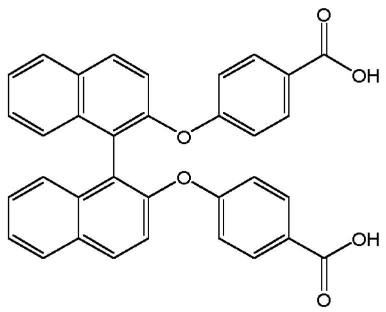

4,4'-([1,1'-Binaphthalene]-2,2'-diylbis(oxy))dibenzoic acid methyl ester

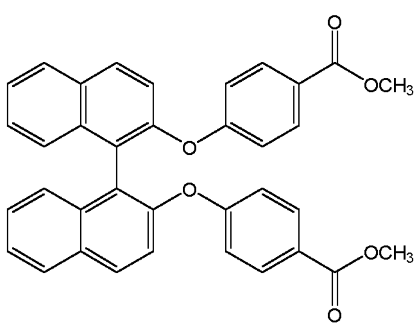

The monomer represented by the general formula (1) can be produced according to the method described in

Adv. Synth. Catal. 2004, 346, 195-198. The monomer represented by the general formula (1) can be produced, for example, as shown in the following reaction formula.

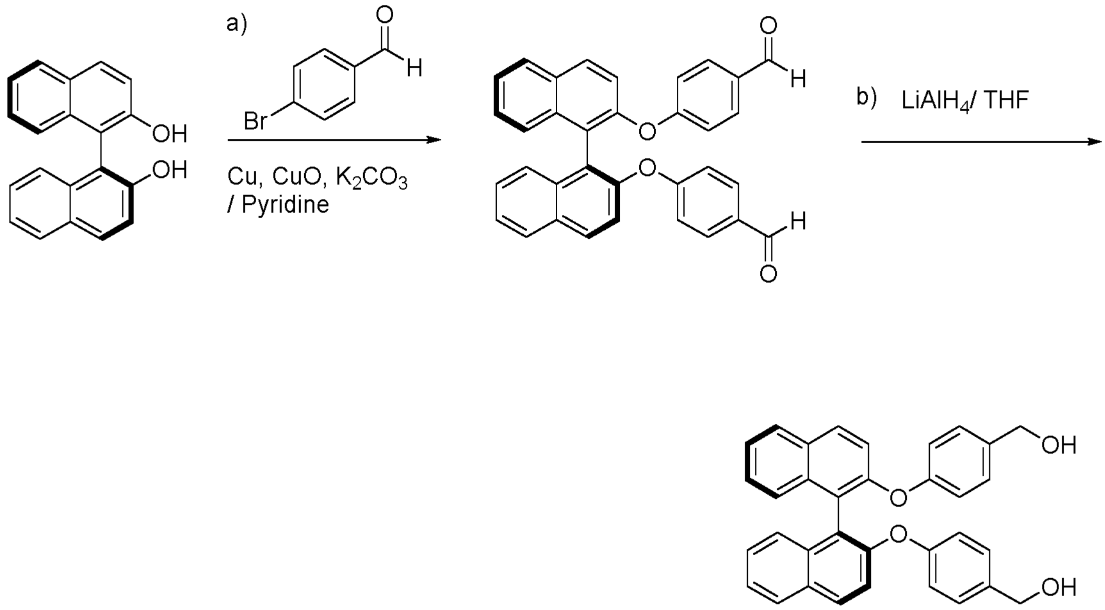


As shown in the above reaction formula, the monomer represented by the general formula (1) is obtained by allowing 2,2-binaphthol to react with p-bromobenzaldehyde in pyridine in the presence of copper, copper oxide and potassium carbonate to obtain 4,4'-([1,1'-binaphthalene]-2,2'-diylbis(oxy))dialdehyde, and then by reducing the obtained 4,4'-([1,1'-binaphthalene]-2,2'-diylbis(oxy))dialdehyde with a reducing agent such as lithium aluminum hydride ($LiAlH_4$). Besides, an isomer is obtained by replacing p-bromobenzaldehyde with o-bromobenzaldehyde or m-bromobenzaldehyde.

The thermoplastic resin of one embodiment of the present invention is not particularly limited, and it includes a polyester resin, a polycarbonate resin, a polyester carbonate resin, an epoxy resin, a polyurethane resin, a polyacrylic acid ester resin, and a polymethacrylic acid ester resin. The thermoplastic resin of one embodiment of the present invention is preferably a polycarbonate resin, a polyester resin or a polyester carbonate resin, and more preferably comprises a constituent unit (A) represented by the following formula:

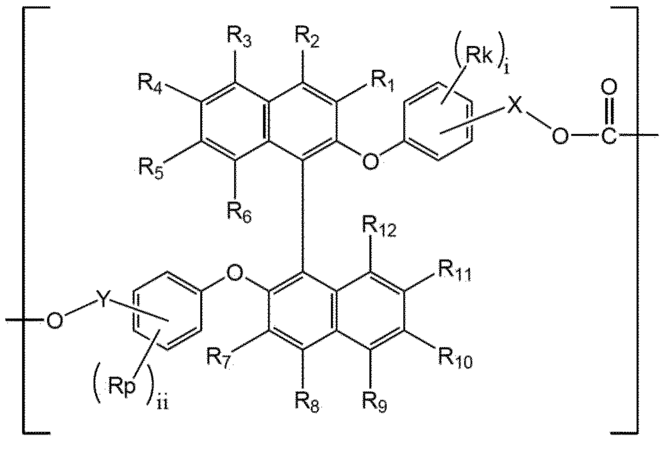

(A)

wherein individual symbols are as defined in the above general formula (1).

In the thermoplastic resin of one embodiment of the present invention, the ratio of the constituent unit (A) represented by the above formula in all constituent units is not particularly limited. The ratio of the constituent unit (A) is preferably 1% to 90% by mole, more preferably 1% to 80% by mole, further preferably 5% to 70% by mole, and particularly preferably 10% to 60 by mole, in all constituent units.

That is to say, the thermoplastic resin of one embodiment of the present invention may comprise constituent

units derived from aliphatic dihydroxy compounds and constituent units derived from aromatic dihydroxy compounds, which are generally used as constituent units of polycarbonate resins or polyester carbonate resins, in addition to the constituent unit (A) represented by the above-described formula.

Specifically, the aliphatic dihydroxy compound includes various compounds, and particular examples thereof may include 1,4-cyclohexanedimethanol, tricyclodecanedimethanol, 1,3-adamantanedimethanol, 2,2-bis(4-hydroxycyclohexyl)-propane, 3,9-bis(2-hydroxy-1,1-dimethylethyl)-2,4,8,10-tetraoxaspiro[5.5]undecane, 2-(5-ethyl-5-hydroxymethyl-1,3-dioxan-2-yl)-2-methylpropan-1-ol, isosorbide, 1,3-propanediol, 1,4-butanediol, and 1,6-hexanediol.

The aromatic dihydroxy compound includes various compounds, and particular examples thereof may include 2,2-bis(4-hydroxyphenyl)propane [bisphenol A], bis(4-hydroxyphenyl)methane, 1,1-bis(4-hydroxyphenyl)ethane, 2,2-bis(4-hydroxy-3,5-dimethylphenyl)propane, 4,4'-dihydroxydiphenyl, bis(4-hydroxyphenyl)cycloalkane, bis(4-hydroxyphenyl)oxide, bis(4-hydroxyphenyl)sulfide, bis(4-hydroxyphenyl)sulfone, bis(4-hydroxyphenyl)sulfoxide, and bis(4-hydroxyphenyl)ketone, and bisphenoxyethanol fluorene.

Moreover, the thermoplastic resin of one embodiment of the present invention preferably comprises a constituent unit (B) derived from a monomer represented by the following general formula (2).

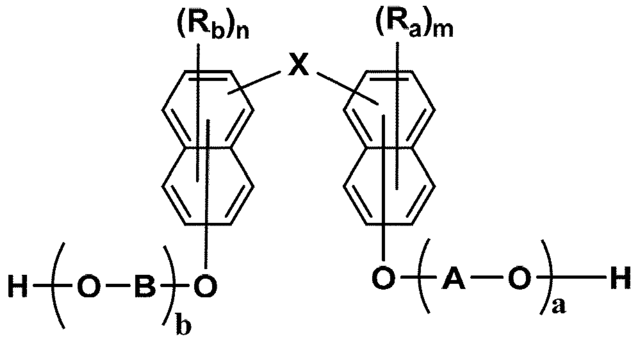

(2)

In the general formula (2), $R_a$ and $R_b$ are each independently selected from the group consisting of a halogen atom, an alkyl group containing 1 to 20 carbon atoms and optionally having a substituent, an alkoxy group containing 1 to 20 carbon atoms and optionally having a substituent, a cycloalkyl group containing 5 to 20 carbon atoms and optionally having a substituent, a cycloalkoxy group containing 5 to 20 carbon atoms and optionally having a substituent, an aryl group containing 6 to 20 carbon atoms and optionally having a substituent, a heteroaryl group containing 6 to 20 carbon atoms and optionally having a substituent, which comprises one or more heterocyclic atoms selected from O, N and S, an aryloxy group containing 6 to 20 carbon atoms and optionally having a substituent, and $-C{\equiv}C-R_h$. Herein, $R_h$ represents an aryl group containing 6 to 20 carbon atoms and optionally having a substituent, or a heteroaryl group containing 6 to 20 carbon atoms and optionally having a substituent, which comprises one or more heterocyclic atoms selected from O, N and S.

$R_a$ and $R_b$ are preferably a hydrogen atom, an aryl group containing 6 to 20 carbon atoms and optionally having a substituent, or a heteroaryl group containing 6 to 20 carbon atoms and optionally having a substituent, which comprises one or more heterocyclic atoms selected from O, N and S; more preferably, a hydrogen atom, or an aryl group containing 6 to 20 carbon atoms and optionally having a substituent; and further preferably, a hydrogen atom, or an aryl group containing 6 to 12 carbon atoms and optionally having a substituent.

In the above general formula (2), X represents a single bond or a fluorene group optionally having a substituent. X is preferably a single bond, or a fluorene group optionally having a substituent, in which a total carbon number is 12 to 20.

In the above general formula (2), A and B each independently represent an alkylene group containing 1 to 5 carbon atoms and optionally having a substituent, and each independently preferably represent an alkylene group containing 2 or 3 carbon atoms.

In the above general formula (2), m and n each independently represent an integer of 0 to 6, preferably an integer of 0 to 3, and more preferably 0 or 1.

In the above general formula (2), a and b each independently represent an integer of 0 to 10, preferably an integer of 1 to 3, and more preferably 1 or 2.

Specific examples of the constituent unit (B) may include those derived from 2,2'-bis(2-hydroxyethoxy)-1,1'-binaphthalene (BNE), DPBHBNA, and the like.

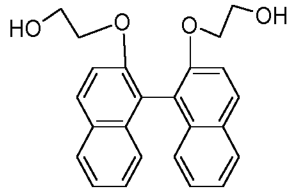
(BNE)

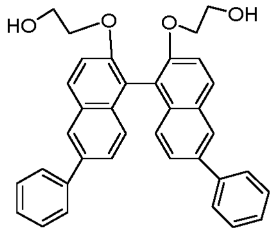
(DPBHBNA)

Furthermore, the thermoplastic resin of one embodiment of the present invention preferably has a constituent unit (C) derived from a monomer represented by the following general formula (3).

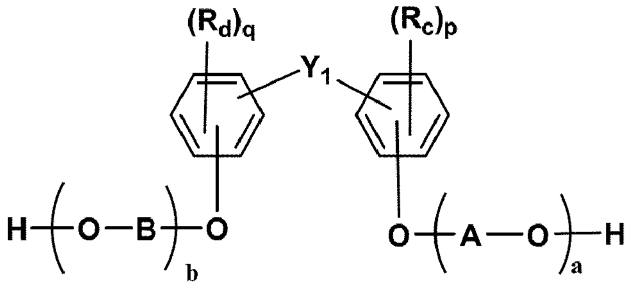
(3)

In the general formula (3), $R_c$ and $R_d$ are each independently selected from the group consisting of a halogen atom, an alkyl group containing 1 to 20 carbon atoms and optionally having a substituent, an alkoxy group containing 1 to 20 carbon atoms and optionally having a substituent, a cycloalkyl group containing 5 to 20 carbon atoms and optionally having a substituent, a cycloalkoxy group containing 5 to 20 carbon atoms and optionally having a substituent, and an aryl group containing 6 to 20 carbon atoms and optionally having a substituent.

$R_c$ and $R_d$ are preferably a hydrogen atom, an aryl group containing 6 to 20 carbon atoms and optionally having a substituent, or a heteroaryl group containing 6 to 20 carbon atoms and optionally having a substituent, which comprises one or more heterocyclic atoms selected from O, N and S; more preferably, a hydrogen atom, or an aryl group containing 6 to 20 carbon atoms and optionally having a substituent; and further preferably, a hydrogen atom, or an aryl group containing 6 to 12 carbon atoms and optionally having a substituent.

In the general formula (3), $Y_1$ represents a single bond, a fluorene group optionally having a substituent, or any one of structural formulae represented by the following formulae (4) to (11); and preferably represents a single bond, or a structural formula represented by the following general formula (4).

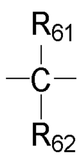
(4)

$-S-$
(5)

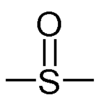
(6)

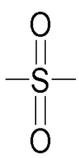
(7)

$-(CH_2)_r-$
(8)

$-O-$
(9)

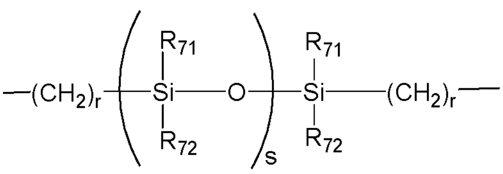
(10)

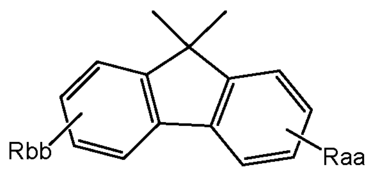
(11)

In the formulae (4) to (11), $R_{61}$, $R_{62}$, $R_{71}$ and $R_{72}$ each independently represent a hydrogen atom, a halogen atom, an alkyl group containing 1 to 20 carbon atoms and optionally having a substituent, or an aryl group containing 6

to 30 carbon atoms and optionally having a substituent, or represent a C1-C20 carbon ring or heterocyclic ring optionally having a substituent, which is formed as a result that $R_{61}$ and $R_{62}$, or $R_{71}$ and $R_{72}$ bind to each other, and $R_{aa}$ and $R_{bb}$ are the same as $R_a$ and $R_b$ in the above general formula (2).

In the formulae (4) to (11), r and s each independently represent an integer of 0 to 5000.

In the above general formula (3), A and B each independently represent an alkylene group containing 1 to 5 carbon atoms and optionally having a substituent, and preferably, an alkylene group containing 2 or 3 carbon atoms. In the above general formula (3), p and q each independently represent an integer of 0 to 4, and preferably 0 or 1. In addition, in the above general formula (3), a and b each independently represent an integer of 0 to 10, preferably an integer of 0 to 5, more preferably an integer of 0 to 2, and for example, 0 or 1.

Specific examples of the constituent unit (C) may include tho se derived from BPEF (9,9-bis(4-(2-hydroxyethoxy)phenyl)fluorene), BPPEF (9,9-bis(4-(2-hydroxyethoxy)-3-phenylphenyl)fluorene), 9,9-bis [6-(2-hydroxyethoxy)naphthalen-2-yl]fluorene (BNEF), bisphenol A, b isphenol AP, bisphenol AF, bisphenol B, bisphenol BP, bisphenol C, bis(4-hydroxyphenyl)-2,2-dichloroethylene, bisphenol E, bisphenol F, bisphenol G, bisphenol M, bisphenol S, bisphenol P, bisphenol PH, bisphenol TMC, bisphenol P-AP (4,4'-(1-phenylethylidene)bisphenol), bisphenol P-CDE (4,4'-cyclododecylidenebisphenol), bisphenol P-HT G (4,4'-(3,3,5-trimethylcyclohexylidene)bisphenol), bisphenol P-MIBK (4,4'-(1,3-dimethylbutylidene)bisphenol), bisphenol PEO-FL (bispheno xyethanolfluorene), bisphenol P-3MZ (4-[1-(4-hydroxyphenyl)-3-methy lcyclohexyl]phenol), bisphenol OC-FL (4,4'-[1-[4-[1-(4-hydroxypheny 1)-1-methylethyl]phenyl]ethylidene]bisphenol), bisphenol Z, BP-2EO (2,2'-[[1,1'-biphenyl]-4,4'-diylbis(oxy)bisethanol), S-BOC (4,4'-(1-meth ylethylidene)bis(2-methylphenol)), and TrisP-HAP (4,4',4''-ethylidenetr isphenol). Among these, the constituent units (C) are preferably th ose derived from BPEF or BNEF.

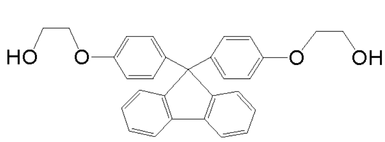
(BPEF)

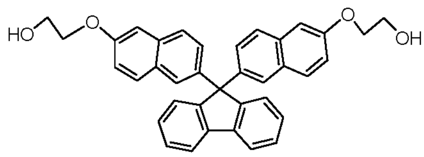
(BNEF)

The thermoplastic resin of one embodiment of the present inv ention essentially comprises the constituent unit (A). The thermopla stic resin of one embodiment of the present invention may also be a polymer that contains the constituent unit (B) and does not contai n the constituent unit (C), a polymer that contains the constituent u nit (C) and does not contain the constituent unit (B), a copolymer having the constituent unit (B) and the constituent unit (C), a mixtu re of a polymer having the constituent unit (B) and a polymer havi ng the constituent unit (C), or a combination thereof. Examples of the polymer that contains the constituent unit (C) and does not cont ain the constituent unit (B) may include those having constituent un its represented by the following formulae (I-1) to (I-3). Examples of the copolymer having the constituent unit (B) and the constituent unit (C) may include those having constituent units represented by formulae (II-1) to (II-4) as shown below.

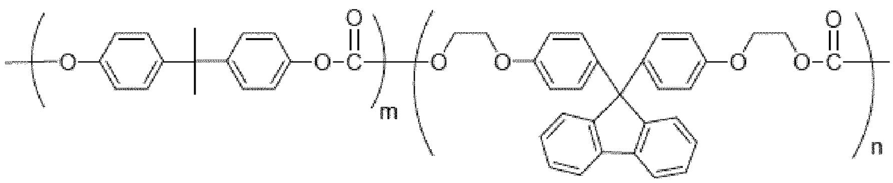
(I−1)

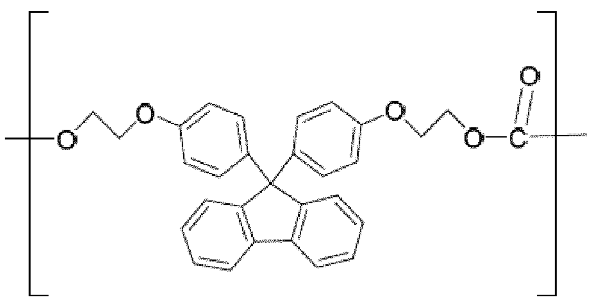
(I−2)

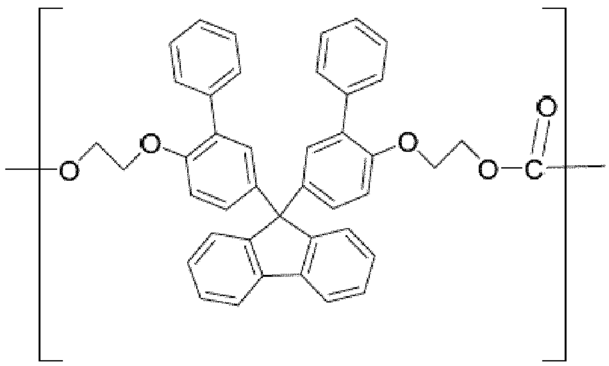

(I-3)

In the formula (I-1), m and n each represent an integer of 1 to 10, preferably an integer of 1 to 5, and more preferably 1; and
the number of repeating units of the formula (I-3) is an inte ger of 1 to 10, preferably an integer of 1 to 5, and more preferabl y 1.

Moreover, as a polymer having multiple types of constituent units, both a block copolymer, in which the values of m and n are large (for example, 100 or more), and a random copolymer, may be adopted. Of these, a random copolymer is preferable, and more pre ferably, a random copolymer, in which the values of m and n are 1, is used.

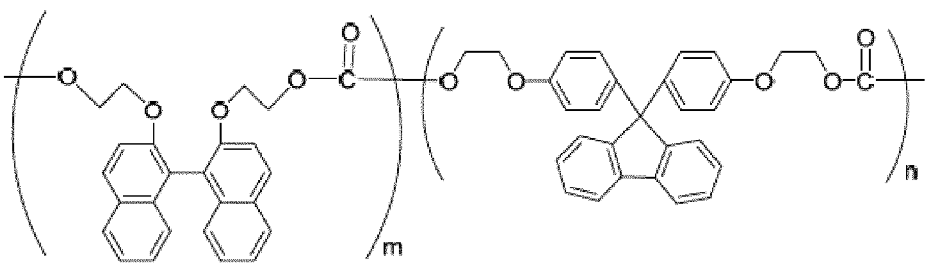

(I I-1)

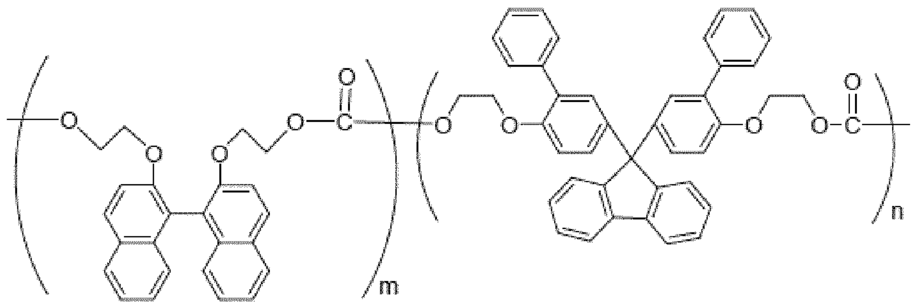

(I I-2)

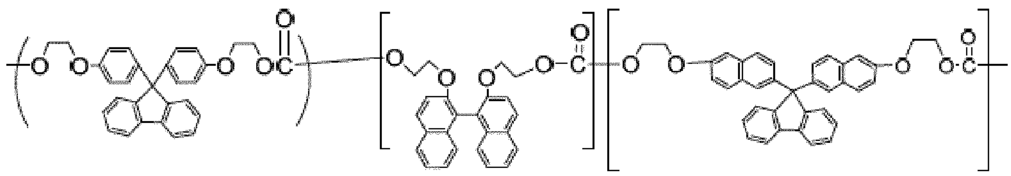

(I I-3)

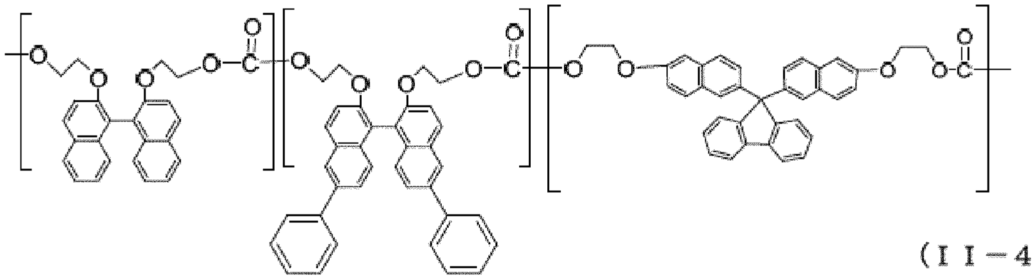

(II-4)

In the above formulae (II-1) to (II-4), m and n each indepen dently represent an integer of 1 to 10, preferably an integer of 1 to 5, and more preferably 1.

Furthermore, as a polymer having multiple types of constitue nt units, both a block copolymer, in which the values of m and n a re large (for example, 100 or more), and a random copolymer, may be adopted. Of these, a random copolymer is preferable, and more preferably, a random copolymer, in which the values of m and n ar e 1, is used.

In such a copolymer, the molar ratio between the constituent unit (B) and the constituent unit (C) is preferably 1 : 99 to 99 : 1, more preferably 10 : 90 to 90 : 10, further preferably 15 : 85 to 85 : 15, and particularly preferably 30 : 70 to 70 : 30. In additio n, in the mixture, the mass ratio between a polymer having the con stituent unit (B) and a polymer having the constituent unit (C) is p referably 1 : 99 to 99 : 1, more preferably 10 : 90 to 90 : 10, fur ther preferably 15 : 85 to 85 : 15, and particularly preferably 30 : 70 to 70 : 30.

Also, the thermoplastic resin of one embodiment of the prese nt invention preferably comprises a constituent unit derived from at least one monomer selected from the following monomer group.

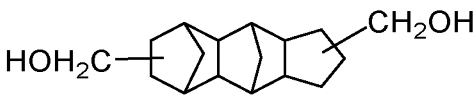
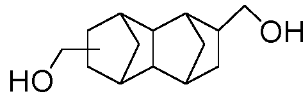

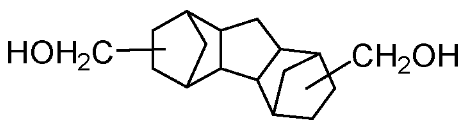
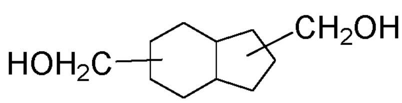

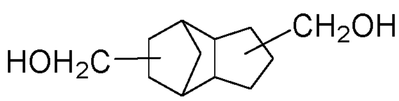
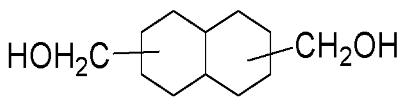

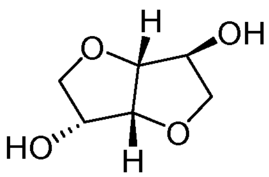
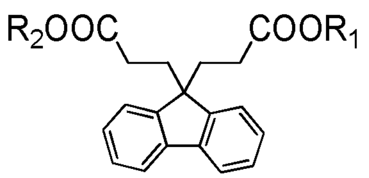

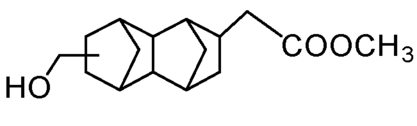
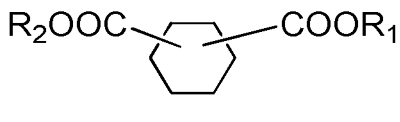

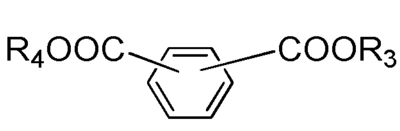
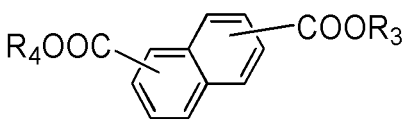

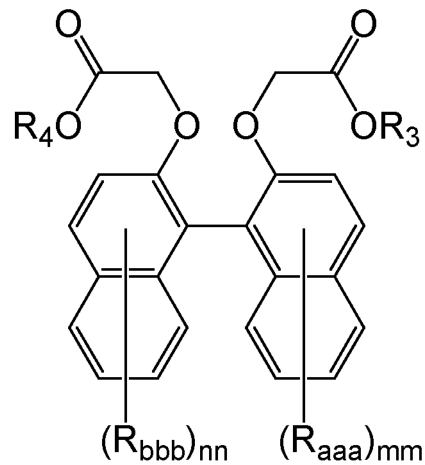

wherein, in the above formulae, $R_1$ and $R_2$ each independently represent a hydrogen atom, a methyl group or an ethyl group, and $R_3$ and $R_4$ each independently represent a hydrogen atom, a methyl group, an ethyl group, or alkylene glycol containing 2 to 5 carbon atoms; and $R_{aaa}$ and $R_{bbb}$ each independently represent a hydrogen atom, a halogen atom, an alkyl group containing 1 to 20 carbon atoms and optionally having a substituent, an alkoxyl group containing 1 to 20 carbon atoms and optionally having a substituent, a cycloalkyl group containing 5 to 20 carbon atoms and optionally having a substituent, a cycloalkoxyl group containing 5 to 20 carbon atoms and optionally having a substituent, an aryl group containing 6 to 20 carbon atoms and optionally having a substituent, a heteroaryl group containing 6 to 20 carbon atoms and optionally having a substituent, which comprises one or more heterocyclic atoms selected from O, N and S, an aryloxy group containing 6 to 20 carbon atoms and optionally having a substituent, and -C=C-$R_h$, and mm and nn each independently represent an integer of 0 to 6.

The polycarbonate resin or polyester carbonate resin of one p referred embodiment of the present invention may comprise, as impu rities, an alcoholic compound that may be generated as a by-product upon the production thereof, such as a phenolic compound, or a di ol component or a carbonic acid diester that has not reacted and re mains, in some cases.

Such an alcoholic compound such as a phenolic compound, a nd such a carbonic acid diester, which are comprised as impurities, may cause a reduction in the strength of the resulting molded body or generation of odors. Accordingly, the smaller the contents of th ese compounds, the better.

The content of the remaining phenolic compound is preferabl y 3000 ppm by mass or less, more preferably 1000 ppm by mass or less, particularly preferably 300 ppm by mass or less, with respect to 100% by mass of the polycarbonate resin.

The content of the remaining diol component is preferably 10 00 ppm by mass or less, more preferably 100 ppm by mass or less, and particularly preferably 10 ppm by mass or less, with respect t o 100% by mass of the polycarbonate resin.

The content of the remaining carbonic acid diester is prefera bly 1000 ppm by mass or less, more preferably 100 ppm by mass o r less, and particularly preferably 10 ppm by mass or less, with res pect to 100% by mass of the polycarbonate resin.

In particular, it is preferable that the contents of compounds such as phenol and t-butyl phenol are small, and it is preferable th at the contents of these compounds are within the above-described r ange.

The content of a phenolic compound remaining in the polycar bonate resin can be measured by a method of analyzing a phenolic compound extracted from the polycarbonate resin, using gas chromat ography.

The content of an alcoholic compound remaining in the polyc arbonate resin can also be measured by a method of analyzing an a lcoholic compound extracted from the polycarbonate resin, using gas chromatography.

The contents of a diol component and a carbonic acid diester remaining in the polycarbonate resin can also be measured by a m ethod of extracting these compounds from the polycarbonate resin, a nd then analyzing them using gas chromatography.

The contents of a by-product alcoholic compound such as a phenolic compound, a diol component, and a carbonic acid diester may be reduced to such an extent that these compounds are undetec table. However, from the viewpoint of productivity, the polycarbon ate resin may comprise very small amounts of these compounds in a range in which the compounds do not impair the effects of the pr esent invention. In addition, plasticity can be improved upon the m elting of the resin, if the resin may comprise very small amounts o f the compounds.

The content of the remaining phenolic compound, diol compo nent or carbonic acid diester may each be, for example, 0.01 ppm b y mass or more, 0.1 ppm by mass or more, or 1 ppm by mass or more, with respect to 100% by

mass of the polycarbonate resin.

The content of the remaining alcoholic compound may be, fo r example, 0.01 ppm by mass or more, 0.1 ppm by mass or more, or 1 ppm by mass or more, with respect to 100% by mass of the p olycarbonate resin.

Besides, the contents of the by-product alcoholic compound s uch as a phenolic compound, the diol component and the carbonic a cid diester in the polycarbonate resin can be regulated to be within the above-described ranges by appropriately adjusting conditions for polycondensation or the setting of apparatuses. Otherwise, the cont ents of these compounds can also be regulated by determining condi tions for an extrusion step after completion of the polycondensation.

For example, the amount of the remaining by-product alcohol ic compound such as a phenolic compound is related to the type of carbonic acid diester used in the polymerization of the polycarbonat e resin, the temperature applied to the polymerization reaction, the polymerization pressure, etc. By adjusting these conditions, the am ount of the remaining by-product alcoholic compound such as a phe nolic compound can be reduced.

For example, when the polycarbonate resin is produced using dialkyl carbonate such as diethyl carbonate, the molecular weight is hardly increased, and low-molecular-weight polycarbonate is thereby obtained, so that the content of an alcoholic compound generated as a by-product tends to be increased. Such alkyl alcohol has high v olatility, and thus, if it remains in the polycarbonate resin, the mol dability of the resin tends to be deteriorated. In addition, when th e amount of the remaining by-product alcoholic compound such as a phenolic compound is large, it is likely that problems regarding od or occur upon the molding of the resin, or it is also likely that the cleavage reaction of a resin skeleton progresses upon compounding, and a reduction in the molecular weight thereby occurs. Therefore, the content of the by-product alcoholic compound remaining in the obtained polycarbonate resin is preferably 3000 ppm by mass or les s, with respect to the amount of the polycarbonate resin (100% by mass). The content of the remaining alcoholic compound is prefera bly 3000 ppm by mass or less, more preferably 1000 ppm by mass or less, and particularly preferably 300 ppm by mass or less, with r espect to 100% by mass of the polycarbonate resin.

< Physical properties of thermoplastic resin >

(1) Refractive index (nD)

In one embodiment of the present invention, one characteristi c of the thermoplastic resin is that it has a high refractive index. The refractive index is preferably 1.64 to 1.70, more preferably 1.6 4 to 1.69, and particularly preferably 1.65 to 1.68. In the present invention, the refractive index can be measured by the method descr ibed in the after-mentioned Examples.

(2) Abbe number (v)

In one embodiment of the present invention, the Abbe numbe r of the thermoplastic resin is preferably 15.0 to 26.0, more prefera bly 15.0 to 24.0, and particularly preferably 18.0 to 22.0. In the p resent invention, the Abbe number can be measured by the method described in the after-mentioned Examples.

(3) Glass transition temperature (Tg)

In one embodiment of the present invention, one characteristi c of the thermoplastic resin is that it has high heat resistance. Th e glass transition temperature (Tg) is preferably 130°C to 180°C, m ore preferably 135°C to 170°C, and particularly preferably 140°C to 160°C. In the present invention, the glass transition temperature c an be measured by the method described in the after-mentioned Exa mples.

(4) Polystyrene-converted weight average molecular weight (Mw)

In one embodiment of the present invention, the polystyrene-converted weight average molecular weight of the thermoplastic resi n is preferably 10,000 to 200,000, more preferably 10,000 to 100,00 0, and particularly preferably 10,000 to 80,000.

< Thermoplastic resin composition >

Another embodiment of the present invention relates to a the rmoplastic resin composition comprising the aforementioned thermopl astic resin and additives. The thermoplastic resin composition of th e present embodiment may also comprise a resin other than the ther moplastic resin of the present invention comprising the aforemention ed constituent unit (A), in a range in which such a resin does not impair the desired effects of the present embodiment.

Such a resin is not particularly limited, and it may be, for example, at least one resin selected from the group consisting of a polycarbonate resin, a polyester resin, a polyester carbonate resin, a (meth)acrylic resin, a polyamide resin, a polystyrene resin, a cycloolefin resin, an acryloni trile-butadiene-styrene copolymer resin, a vinyl chloride resin, a pol yphenylene ether resin, a polysulfone resin, a polyacetal resin, and a methyl methacrylate-styrene copolymer resin. Various types of kn own resins can be used as such resins, and one type of such resin alone can be added to, or a combination of two or more types of s uch resins can be added to the thermoplastic resin composition.

[Antioxidant]

The thermoplastic resin composition preferably comprises an antioxidant as an additive described above.

As such an antioxidant, the thermoplastic resin composition p referably comprises at least one of a phenolic antioxidant and a pho sphite-based antioxidant.

Examples of the phenolic antioxidant may include 1,3,5-tris(3, 5-di-tert-butyl-4-hydroxyphenylmethyl)-2,4,6-trimethylbenzene, 1,3,5-tr is(3,5-di-tert-butyl-4-hydroxybenzyl)-1,3,5-triazine-2,4,6(1H,3H,SH)-tri one, 4,4',4"-(1-methylpropanyl-3-ylidene)tris(6-tert-butyl-m-cresol), 6, 6'-di-tert-butyl-4,4'-butylidenedi-m-cresol, octadecyl 3-(3,5-di-tert-buty 1-4-hydroxyphenyl)propionate, pentaerythritol-tetrakis[3-(3,5-di-tert-but yl-4-hydroxyphenyl)propionate], 3,9-bis{2-[3-(3-tert-butyl-4-hydroxy-5-methylphenyl)propionyloxy] - 1, 1 -dimethyl ethyl 1-2,4,8, 1 0-tetraoxospiro[5. 5]undecane, and pentaerythritol-tetrakis[3-(3,5-di-tert-butyl-4-hydroxyp henyl)propionate]. Among these, pentaerythritol-tetrakis[3-(3,5-di-tert -butyl-4-hydroxyphenyl)propionate] is preferable.

Examples of the phosphite-based antioxidant may include 2-et hylhexyl diphenyl phosphite, isodecyl diphenyl phosphite, triisodecyl phosphite, triphenyl phosphite, 3,9-bis(octadecyloxy)-2,4,8,10-tetraoxy -3,9-diphosphaspiro[5.5]undecane, 3,9-bis(2,6-di-tert-butyl-4-methylphe noxy)-2,4,8,10-tetraoxa-3,9-diphosphaspiro[5.5]undecane, 2,2'-methylen ebis(4,6-di-tert-butylphenyl)2-ethylhexyl phosphite, tris(2,4-ditert-buty lphenyl) phosphite, tris(nonylphenyl) phosphite, tetra-C12-15-alkyl(pr opane-2,2-diylbis(4,1-phenylene)) bis(phosphite), and 3,9-bis(2,6-di-te rt-butyl-4-methylphenoxy)-2,4,8,10-tetraoxa-3,9-diphosphaspiro[5.5]und ecane. Among these, 3,9-bis(2,6-di-tert-butyl-4-methylphenoxy)-2,4,8, 10-tetraoxa-3,9-diphosphaspiro[5.5]undecane is preferable.

As such antioxidants, the aforementioned compounds may be used alone as a single type, or may also be used as a mixture of t wo or more types.

The antioxidant is preferably comprised in the thermoplastic r esin composition in an amount of 1 ppm by weight to 3000 ppm by weight, with respect to the total weight of the resin composition. The content of the antioxidant in the thermoplastic resin compositio n is more preferably 50 ppm by weight to 2500 ppm by weight, fur ther preferably 100 ppm by weight to 2000 ppm by weight, particul arly preferably 150 ppm by weight to 1500 ppm by weight, and fur ther particularly preferably 200 ppm by weight to 1200 ppm by wei ght.

[Release agent]

The thermoplastic resin composition preferably comprises a re lease agent as an additive described above.

Examples of the release agent may include ester compounds i ncluding glycerin fatty acid esters such as mono/diglyceride of glyc erin fatty acid, glycol fatty acid esters such as propylene glycol fat ty acid ester and sorbitan fatty acid ester, higher alcohol fatty acid esters, full esters of aliphatic polyhydric alcohol and aliphatic carbo xy acid, and monofatty acid esters. When an ester of aliphatic pol yhydric alcohol and aliphatic carboxy acid is used as a release agen t, any of a monoester, a full ester, and the like can be adopted. F or example, those other than full esters, such as a monoester, may be used.

Specific examples of the release agent may include the follo wing substances: namely,

sorbitan fatty acid esters, such as sorbitan stearate, sorbitan l aurate, sorbitan oleate, sorbitan trioleate, sorbitan tribehenate, sorbit an stearate, sorbitan tristearate, and sorbitan caprylate;
propylene glycol fatty acid esters, such as propylene glycol monostearate, propylene glycol monooleate, propylene glycol monobe henate, propylene glycol monolaurate, and propylene glycol monopal mitate;
higher alcohol fatty acid esters, such as stearyl stearate;
glycerin fatty acid ester monoglycerides, which include: mono glycerides including glycerin monostearate, glycerin monohydroxystea rate such as glycerin mono-12-hydroxystearate, glycerin monooleate, glycerin monobehenate, glycerin monocaprylate, glycerin monocaprate and glycerin monolaurate; and mono/diglycerides including glycerin mono/distearate, glycerin mono/distearate, glycerin mono/dibehenate, glycerin mono/dioleate;
acetylated monoglycerides of glycerin fatty acid esters, such as glycerin diacetomonolaurate;
organic acid monoglycerides of glycerin fatty acid esters, suc h as citric acid fatty acid monoglyceride, succinic acid fatty acid m onoglyceride, and diacetyl tartaric acid fatty acid monoglyceride; an d
polyglycerin fatty acid esters, such as diglycerin stearate, dig lycerin laurate, diglycerin oleate, diglycerin monostearate, diglycerin monolaurate, diglycerin monomyristate, diglycerin monooleate, tetragl ycerin stearate, decaglycerin laurate, decaglycerin oleate, and polygl ycerin polyricinoleate.

The release agent is preferably comprised in the thermoplasti c resin composition in an amount of 1 ppm by weight to 5000 ppm by weight, with respect to the total weight of the resin compositio n. The content of the release agent in the thermoplastic resin com position is more preferably 50 ppm by weight to 4000 ppm by weig ht, further preferably 100 ppm by weight to 3500 ppm by weight, p articularly preferably 500 ppm by weight to 13000 ppm by weight, and further particularly preferably 1000 ppm by weight to 2500 ppm by weight.

[Other additives]

Additives other than the aforementioned antioxidant and relea se agent may also be added to the thermoplastic resin composition. Examples of the additives that may be comprised in the thermoplas tic resin composition may include a compounding agent, a catalyst i nactivator, a thermal stabilizer, a plasticizer, a filler, an ultraviolet absorber, a rust inhibitor, a dispersant, an antifoaming agent, a leve ling agent, a flame retardant, a lubricant, a dye, a pigment, a bluin g agent, a nucleating agent, and a clearing agent.

The content of additives other than the antioxidant and the r elease agent in the thermoplastic resin composition is preferably 10 ppm by weight to 5.0% by weight, more preferably 100 ppm by we ight to 2.0% by weight, and further preferably 1000 ppm by weight to 1.0% by weight, but is not limited thereto.

The aforementioned additives are likely to adversely affect tr ansmittance. Thus, it is preferable not to add such additives excess ively, and more preferably, the total additive amount is, for exampl e, within the aforementioned range.

Further, another embodiment of the present invention relates to a thermoplastic resin composition comprising a modifier represent ed by the following general formula (1) and a thermoplastic resin:

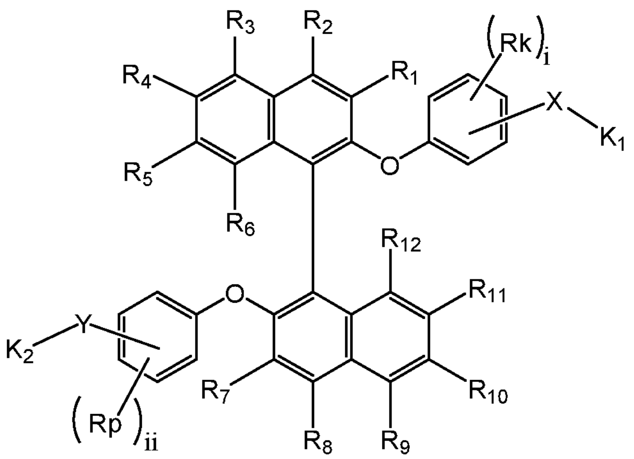

(1)

wherein each symbol in the above general formula (1) is the same as that in the aforementioned general formula (1). That is to say, a monomer represented by the general formula (1) can also be used as a modifier.

In one embodiment of the present invention, the above-descri bed modifier can be mixed with the thermoplastic resin, so that the mass ratio between the thermoplastic resin and the modifier become s the thermoplastic resin : the modifier = 99.9 : 0.1 to 70 : 30. T he mass ratio may be preferably 99 : 1 to 70 : 30, and more prefe rably 98 : 2 to 70 : 30, and it may be, for example, 99 : 1, 98 : 2, 97 : 3, 96 : 4, 95 : 5, 94 : 6, 93 : 7, 92 : 8, 91 : 9, 90 : 10, 85 : 15, 80 : 20, 75 : 25, 70 : 30, or the like. In the present inv ention, if the mass ratio between the thermoplastic resin and the m odifier is within the above-described range, a resin composition havi ng high fluidity and good moldability can be provided.

< Optical member >

The thermoplastic resin or the thermoplastic resin compositio n of the present invention (hereinafter simply abbreviated as a "resi n composition") can be preferably used in an optical member. In o ne embodiment of the present invention, an optical member comprisi ng the resin composition of the present invention is provided. In o ne embodiment of the present invention, the optical member may in clude, but is not limited to, an optical disk, a transparent conductiv e substrate, an optical card, a sheet, a film, an optical fiber, a lens, a prism, an optical film, a substrate, an optical filter, a hard coat film, and the like. The resin composition of the present invention has high fluidity, and can be molded according to a cast method. Hence, the present resin composition is preferably used, in particula r, in production of a

thin optical member. In a preferred embodim ent of the present invention, the optical member produced using the resin composition of the present invention may be an optical lens. In another preferred embodiment of the present invention, the optica l member produced using the resin composition of the present inven tion may be an optical film.

When an optical member comprising the resin composition of the present invention is produced according to injection molding, th e optical member is preferably molded under conditions of a cylind er temperature of 260°C to 350°C and a mold temperature of 90°C to 170°C. The optical member is more preferably molded under co nditions of a cylinder temperature of 270°C to 320°C and a mold t emperature of 100°C to 160°C. When the cylinder temperature is h igher than 350°C, the resin composition is decomposed and colored. On the other hand, when the cylinder temperature is lower than 26 0°C, the melt viscosity becomes high, and it easily becomes difficul t to mold the optical member. Moreover, when the mold temperatu re is higher than 170°C, it easily becomes difficult to remove a mo lded piece consisting of the resin composition from a mold. On th e other hand, when the mold temperature is lower than 90°C, the re sin is hardened too quickly in a mold upon the molding thereof, an d it becomes difficult to control the shape of a molded piece, or it easily becomes difficult to sufficiently transcribe a vehicle placed i n a mold.

< Optical lens >

In one embodiment of the present invention, the resin compo sition can be preferably used in an optical lens. Since the optical lens produced using the resin composition of the present invention has a high refractive index and is excellent in terms of heat resista nce, it can be used in fields in which expensive glass lenses having a high refractive index have been conventionally used, such as tele scopes, binoculars and TV projectors, and thus, the optical lens pro duced using the present resin composition is extremely useful.

For instance, regarding a lens used for smart phones, a lens molded from a thermoplastic resin comprising the constituent unit (A) is overlapped with a lens molded from a resin comprising the c onstituent unit represented by any one of the formulae (II-1) to (II-4) or a resin comprising a constituent unit derived from a monomer represented by any one of the following formulae, so that the lens es can be used as a lens unit:

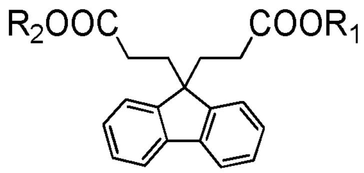

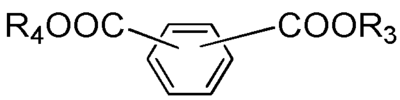

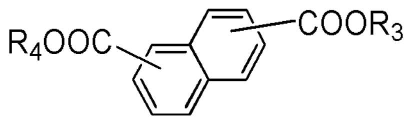

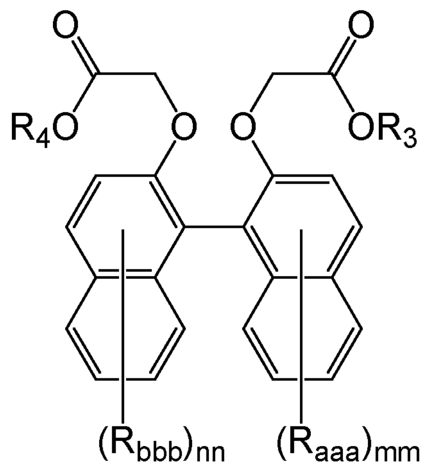

wherein, in the above formulae, $R_1$ and $R_2$ each independently represent a hydrogen atom, a methyl group or an ethyl group, and $R_3$ and $R_4$ each independently represent a hydrogen atom, a methyl group, an ethyl group, or alkylene glycol containing 2 to 5 carbon atoms; and $R_{aaa}$ and $R_{bbb}$ each independently represent a hydrogen atom, a halogen atom, an alkyl group containing 1 to 20 carbon atoms and optionally having a substituent, an alkoxyl group containing 1 to 20

carbon atoms and optionally having a substituent, a cycloalkyl group containing 5 to 20 carbon atoms and optionally having a substituent, a cycloalkoxyl group containing 5 to 20 carbon atoms and optionally having a substituent, an aryl group containing 6 to 20 carbon atoms and optionally having a substituent, a heteroaryl group containing 6 to 20 carbon atoms and optionally having a substituent, which comprises one or more heterocyclic atoms selected from O, N and S, an aryloxy group containing 6 to 20 carbon atoms and optionally having a substituent, and $-C=C-R_h$, and mm and nn each independently represent an integer of 0 to 6.

A lens molded from a resin containing a structural unit derived from any of the monomers of the above formula can be used as a lens unit by being superimposed on each other.

The optical lens of the present invention is preferably used i n the shape of an aspherical lens, as necessary. Since the aspheric al lens can reduce spherical aberration to substantially zero with a single lens thereof, it is not necessary to eliminate the spherical ab erration by a combination of a plurality of spherical lenses, and the reby, it becomes possible to achieve weight saving and a reduction in production costs. Therefore, among the optical lenses, the asphe rical lens is particularly useful as a camera lens.

Moreover, since the optical lens of the present invention has high molding fluidity, the present optical lens is particularly useful as a material of a thin and small optical lens having a complicated shape. Regarding the specific size of a lens, the thickness of the c entral portion is preferably 0.05 to 3.0 mm, more preferably 0.05 to 2.0 mm, and further preferably 0.1 to 2.0 mm. In addition, the di ameter is preferably 1.0 mm to 20.0 mm, more preferably 1.0 to 10. 0 mm, and further preferably , 3.0 to 10.0 mm. Further, regarding the shape thereof, the optical lens of the present invention is prefer ably a meniscus lens, in which one surface is a convex, and the ot her surface is a concave.

The optical lens of the present invention is molded according to any given method such as die molding, cutting, polishing, laser machining, electrical discharge machining, or etching. Among these methods, die molding is more preferable in terms of production cost s.

< Optical film >

In one embodiment of the present invention, the resin compo sition can be preferably used in optical films. In particular, since the optical film produced using the polycarbonate resin of the prese nt invention is excellent in terms of transparency and heat resistanc e, it can be preferably used for films for use in liquid crystal subst rates, optical memory cards, etc.

In order to avoid the mixing of foreign matters into the opti cal lens, the molding environment must be naturally a low-dust envi ronment, and the class is preferably 6 or less, and more preferably 5 or less.

Examples

Hereinafter, the examples of the present invention will be sh own together with comparative examples, and the contents of the in vention will be described in detail. However, the present invention is not limited to these examples.

1) Refractive index (nD)

A polycarbonate resin was molded according to JIS B 7071-2: 2018, to obtain a V block, which was then used as a test piece. The refractive index (nD) was measured at 23°C using a refractometer (KPR-3000, manufactured by Shimadzu Corporation).

2) Abbe number (ν)

The same test piece (V block) as that used in the measurement of a refractive index was used, and the refractive indexes at wavelengths of 486 nm, 589 nm, and 656 nm were measured at 23°C using a refractometer. Thereafter, the Abbe number was calculated according to the following equation:

$$\nu = (nD-1)/(nF-nC),$$

wherein

- nD: refractive index at a wavelength of 589 nm,
- nC: refractive index at a wavelength of 656 nm, and
- nF: refractive index at a wavelength of 486 nm.

3) Glass transition temperature (Tg)

The glass transition temperature (Tg) was measured according to JIS K7121-1987, using a differential scanning calorimeter (X-DSC7000, Hitachi High-Tech Science Corporation) by a temperature-increasing program of 10°C/min.

4) Weight average molecular weight (Mw)

The weight average molecular weight of a resin was measured by applying gel permeation chromatography (GPC) and then calculating the weight average molecular weight in terms of standard polystyrene. The used apparatus, columns and measurement conditions are as follows.

- GPC apparatus: HLC-8420GPC, manufactured by Tosoh Corporation
- Columns: TSKgel SuperHM-M x 3, manufactured by Tosoh Corporation

  TSKgel guard column SuperH-H x 1, manufactured by Tosoh Corporation
  TSKgel SuperH-RC x 1, manufactured by Tosoh Corporation

- Detector: RI Detector
- Standard polystyrene: Standard Polystyrene Kit PStQuick C, manufactured by Tosoh Corporation
- Sample solution: 0.2 mass % Tetrahydrofuran solution
- Eluent: Tetrahydrofuran
- Eluent flow rate: 0.6 mL/min
- Column temperature: 40°C

(Example 1)

Raw materials, namely, 7.50 kg (15.04 mol) of (([1,1'-binaphthalene]-2,2'-diylbis(oxy))bis(4,1-phenylene))dimethanol represented by the following structural formula (hereinafter referred to as "BINOL-DBAL"), 6.60 kg (15.04 mol) of 9,9-bis[4-(2-hydroxyethoxy)phenyl]fluorene represented by the following structural formula (hereinafter referred to as "BPEF"), 6.64 kg (30.99 mol) of diphenyl carbonate (hereinafter referred to as "DPC"), and 12 ml (2.5 x $10^{-2}$ mol/L) of an aqueous solution of sodium hydrogen carbonate (3.0 x $10^{-4}$ mol, i.e., 10 $\times$ $10^{-6}$ mol with respect to a total of 1 mol of a dihydroxy compound) were placed in a 50-L reactor equipped with a stirrer and a distillation apparatus, and the inside of the reactor was then substituted with nitrogen. Thereafter, the mixture was heated to 205°C over 1 hour in a nitrogen atmosphere under a pressure of 760 Torr, and was stirred. After the raw materials had been completely dissolved, the pressure reduction degree was adjusted to 150 Torr over 15 minutes, and the reaction mixture was then retained under conditions of 205°C and 150 Torr for 20 minutes, so as to carry out a transesterification reaction. Further, the temperature was increased to 240°C at a rate of 37.5°C/hr, and the reaction mixture was then retained at 240°C under a pressure of 150 Torr for 10 minutes. Thereafter, the pressure reduction degree was adjusted to 120 Torr over 10 minutes, and the reaction mixture was then retained at 240°C under a pressure of 120 Torr for 70 minutes. Thereafter, the pressure reduction degree was adjusted to 100 Torr over 10 minutes, and the reaction mixture was then retained at 240°C under a pressure of 100 Torr for 10 minutes. Further, the pressure reduction degree was adjusted to 1 Torr or less over 40 minutes, and a polymerization reaction was then carried out at 240°C under a pressure of 1 Torr for 10 minutes. After completion of the reaction, nitrogen was introduced into the reaction system in the reactor, followed by pressurization. The generated polycarbonate resin was extracted while pelletizing, so as to obtain a polycarbonate resin. The physical properties of the obtained polycarbonate resin are shown in Table 1 below.

It is to be noted that the monomer represented by the general formula (1), "BINOL-DBAL," was obtained by the method described in Adv. Synth. Catal. 2004, 346, 195-198.

BINOL-DBAL

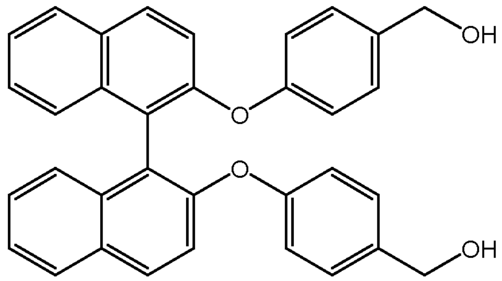

BPEF

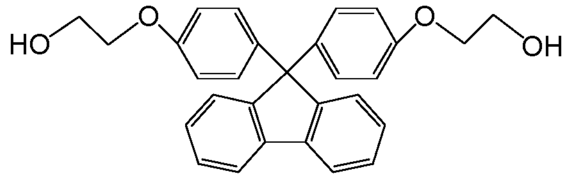

(Comparative Example 1)

A polycarbonate resin was obtained in the same manner as that of Example 1, with the exception that 6.00 kg (16.02 mol) of 2,2'-bis(2-hydroxyethoxy)-1,1'-binaphthalene represented by the following structural formula (hereinafter referred to as "BINOL-2EO"), 7.03 kg (16.02 mol) of 9,9-bis[4-(2-hydroxyethoxy)phenyl]fluorene represented by the above structural formula ("BPEF"), 7.07 kg (33.01 mol) of diphenyl carbonate ("DPC"), and 13 ml ($2.5 \times 10^{-2}$ mol/L) of an aqueous solution of sodium hydrogen carbonate ($3.2 \times 10^{-4}$ mol, i.e., $10 \times 10^{-6}$ mol with respect to a total of 1 mol of a dihydroxy compound) were used as raw materials. The physical properties of the obtained polycarbonate resin are shown in Table 1 below.

BINOL-2EO

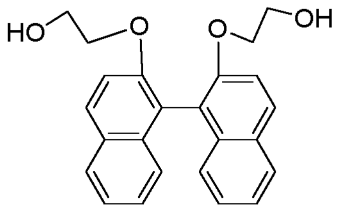

(Examples 2 to 6)

The polycarbonate resins of Examples 2 to 6 were obtained in the same manner as that of Example 1, with the exception that the raw materials shown in Table 1 were used in amounts shown in Table 1. The physical properties of the obtained polycarbonate resins are shown in Table 1 below.

BINOL-DBALo

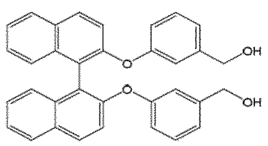

DPBHBNA

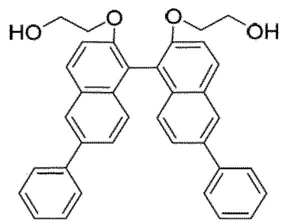

BINOL-DBALo: (([1,1'-Binaphthalene]-2,2'-diylbis(oxy))bis(3,1-phenylene))dimethanol

DPBHBNA: 6,6'-Diphenyl-2,2'-bis-(2-hydroxyethoxy)-1,1'-binaphthyl

(Example 7)

Raw materials, namely, 8.33 kg (16.71 mol) of BINOL-DBAL, 2.00 kg (3.71 mol) of 2,2'-(((9H-fluorene-9,9-diyl)bis(naphthalene-6,2-diyl))bis(oxy))bis(ethanol-1-ol) represented by the following structural formula (hereinafter referred to as "NOLE" or "BNEF"), 6.72 kg (16.71 mol) of 1,1'-binaphthalene-2,2'-diylbisoxybisacetic acid represented by the following structural formula (hereinafter referred to as "BINOL-DC"), 0.96 kg (4.47 mol) of DPC, 1.41g of aluminum(III) acetylacetonate serving as a catalyst (wherein the amount of Al was 7 ppm with respect to the amount of a resin generated), and 1.69 ml of diethyl (4-methylbenzyl)phosphonate (wherein the amount of P was 14 ppm with respect to the amount of a resin generated) were placed in a 50-L reactor equipped with a stirrer and a distillation apparatus, and the inside of the reactor was then substituted with nitrogen. Thereafter, the mixture was heated to 205°C over 1 hour in a nitrogen atmosphere under a pressure of 760 Torr, and was stirred. After the raw materials had been completely dissolved, the pressure reduction degree was adjusted to 300 Torr over 15 minutes, and the reaction mixture was then retained under conditions of 205°C and 300 Torr for 90 minutes, so as to carry out a transesterification reaction. Further, the temperature was increased to 240°C at a rate of 37.5°C/hr, and the reaction mixture was then retained at 240°C under a pressure of 300 Torr for 10 minutes. Thereafter, the pressure reduction degree was adjusted to 150 Torr over 10 minutes, and the reaction mixture was then retained at 240°C under a pressure of 150 Torr for 1 hour. Thereafter, the pressure reduction degree was adjusted to 100 Torr over 20 minutes, and the reaction mixture was then retained at 240°C under a pressure of 100 Torr for 10 minutes. Further, the pressure reduction degree was adjusted to 1 Torr or less over 40 minutes, and a polymerization reaction was then carried out at 240°C under a pressure of 1 Torr for 10 minutes. After completion of the reaction, nitrogen was blown into the reactor, followed by pressurization. The generated polyester carbonate resin was extracted while pelletizing, so as to obtain a polyester carbonate resin. The physical properties of the obtained polyester carbonate resin are shown in Table 1 below.

NOLE

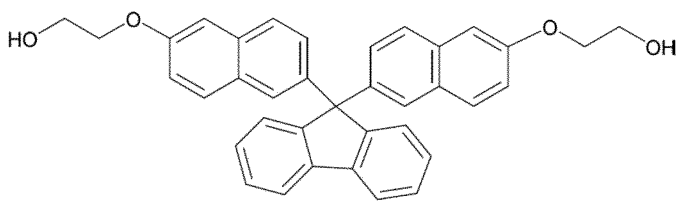

BINOL-DC

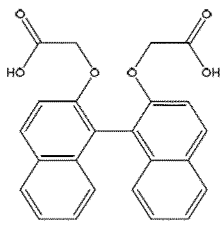

(Example 8)

The polyester carbonate resin of Example 8 was obtained in the same manner as that of Example 7, with the exception that the raw materials shown in Table 1 were used in amounts shown in Table 1. The physical properties of the obtained polyester carbonate resin are shown in Table 1 below.

[Table 1]

| | Raw Materials (% by mole) | | | | | | | Physical Properties | | | |
|---|---|---|---|---|---|---|---|---|---|---|---|
| | BINOL-DBAL | BINOL-DBALo | BINOL-2EO | BPEF | DPBHBNA | NOLE (BNEF) | BINOL-DC | Refractive index nD | Abbe number v | Tg | Molecular weight Mw |
| Example 1 | 50 | - | - | 50 | - | - | | 1.66 | 20.2 | 147 | 30500 |
| Comp.Ex. 1 | - | - | 50 | 50 | - | - | | 1.65 | 21.1 | 129 | 30000 |
| Example 2 | - | 50 | - | 50 | - | - | | 1.66 | 20.5 | 145 | 35200 |
| Example 3 | 40 | - | - | - | 60 | - | | 1.69 | 16.6 | 157 | 29500 |
| Example 4 | 43 | - | 21 | - | 36 | - | | 1.69 | 17.2 | 147 | 36700 |
| Example 5 | - | 40 | - | - | 60 | - | | 1.69 | 16.7 | 156 | 38000 |
| Example 6 | - | 30 | 15 | - | 55 | - | | 1.69 | 16.8 | 150 | 34400 |
| Example 7 | 45 | - | - | - | - | 10 | 45 | 1.69 | 17.8 | 156 | 32300 |
| Example 8 | - | 34 | - | - | - | 21 | 45 | 1.68 | 18.0 | 160 | 31000 |

From the results shown in Table 1, it is found that, in Examples 1 to 8 in which the monomer represented by the general formula (1) was used, thermoplastic resins, which had a higher glass transition temperature and were more excellent not only in optical properties but also in heat resistance, could be obtained than the thermoplastic resin of Comparative Example 1 in which the aforementioned monomer was not used.

## Claims

1. A thermoplastic resin, comprising a constituent unit (A) derived from a monomer represented by the following general formula (1):

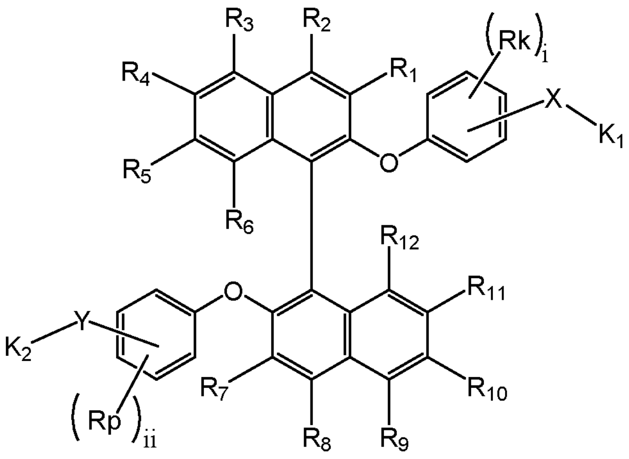

(1)

wherein

$R_1$ to $R_{12}$, Rk, and Rp each independently represent a hydrogen atom, a fluorine atom, a chlorine atom, a bromine atom, an iodine atom, a cycloalkyl group containing 5 to 20 carbon atoms, a cycloalkoxyl group containing 5 to 20 carbon atoms, an aryl group containing 6 to 20 carbon atoms, a linear or branched alkyl group containing 1 to 10 carbon atoms, an alkenyl group containing 2 to 10 carbon atoms, an alkoxy group containing 1 to 10 carbon atoms, a heteroaryl group containing 6 to 20 carbon atoms, which comprises one or more heterocyclic atoms selected from O, N and S, or an aralkyl group containing 7 to 20 carbon atoms, and
X and Y represent a single bond or an alkylene group containing 1 to 5 carbon atoms, i and ii each independently represent an integer of 0 to 4, and $K_1$ and $K_2$ each independently represent -OH, -COOH, or - COORq, wherein Rq represents an alkyl group containing 1 to 5 carbon atoms.

2. The thermoplastic resin according to claim 1, which is a polycarbonate resin, a polyester resin or a polyester carbonate resin.

3. The thermoplastic resin according to claim 1 or 2, wherein, in the general formula (1), $R_1$ to $R_{12}$, Rk, and Rp represent a hydrogen atom, X and Y represent a methylene group, and $K_1$ and $K_2$ represent -OH.

4. The thermoplastic resin according to claim 1 or 2, wherein, in the general formula (1), $R_1$ to $R_{12}$, Rk, and Rp represent a hydrogen atom, X and Y represent a single bond, and $K_1$ and $K_2$ represent -COOH or - COORq, wherein Rq represents an alkyl group containing 1 to 5 carbon atoms.

5. The thermoplastic resin according to any one of claims 1 to 4, which comprises a constituent unit (B) derived from a monomer represented by the following general formula (2) and/or a constituent unit (C) derived from a monomer represented by the following general formula (3):

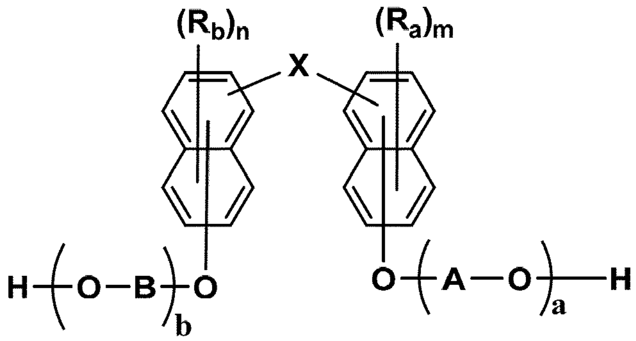

(2)

wherein

$R_a$ and $R_b$ are each independently selected from the group consisting of a hydrogen atom, a halogen atom, an alkyl group containing 1 to 20 carbon atoms and optionally having a substituent, an alkoxyl group containing 1 to 20 carbon atoms and optionally having a substituent, a cycloalkyl group containing 5 to 20 carbon atoms and optionally having a substituent, a cycloalkoxyl group containing 5 to 20 carbon atoms and optionally having a substituent, an aryl group containing 6 to 20 carbon atoms and optionally having a substituent, a heteroaryl group containing 6 to 20 carbon atoms and optionally having a substituent, which comprises one or more heterocyclic atoms selected from O, N and S, an aryloxy group containing 6 to 20 carbon atoms and optionally having a substituent, and $-C=C-R_h$,

$R_h$ represents an aryl group containing 6 to 20 carbon atoms and optionally having a substituent, or a heteroaryl group containing 6 to 20 carbon atoms and optionally having a substituent, which comprises one or more heterocyclic atoms selected from O, N and S,

X represents a single bond or a fluorene group optionally having a substituent,

A and B each independently represent an alkylene group containing 1 to 5 carbon atoms and optionally having a substituent,

m and n each independently represent an integer of 0 to 6, and

a and b each independently represent an integer of 0 to 10; and/or

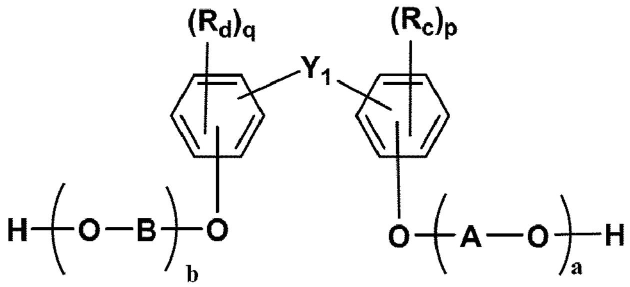

(3)

wherein

$R_c$ and $R_d$ are each independently selected from the group consisting of a hydrogen atom, a halogen atom, an alkyl group containing 1 to 20 carbon atoms and optionally having a substituent, an alkoxyl group containing 1 to 20 carbon atoms and optionally having a substituent, a cycloalkyl group containing 5 to 20 carbon atoms and optionally having a substituent, a cycloalkoxyl group containing 5 to 20 carbon atoms and optionally having a substituent, and an aryl group containing 6 to 20 carbon atoms and optionally having a substituent,

$Y_1$ represents a single bond, a fluorene group optionally having a substituent, or any one of the structural formulae represented by the following formulae (4) to (11):

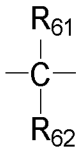 (4)

$-S-$ (5)

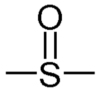 (6)

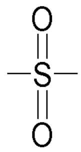 (7)

$-(CH_2)_r-$ (8)

$-O-$ (9)

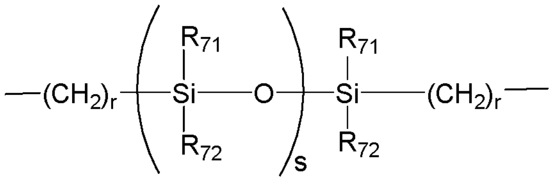 (10)

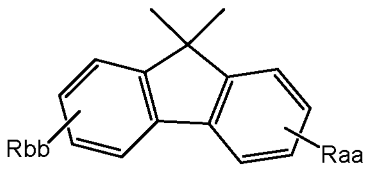 (11)

(wherein, in the formulae (4) to (11),

$R_{61}$, $R_{62}$, $R_{71}$, and $R_{72}$ each independently represent a hydrogen atom, a halogen atom, an alkyl group containing 1 to 20 carbon atoms and optionally having a substituent, or an aryl group containing 6 to 30 carbon atoms and optionally having a substituent, or represent a C1-C20 carbon ring or heterocyclic ring optionally having a substituent, which is formed as a result that $R_{61}$ and $R_{62}$, or $R_{71}$ and $R_{72}$ bind to each other,

$R_{aa}$ and $R_{bb}$ are the same as $R_a$ and $R_b$ in the general formula (2), and

r and s each independently represent an integer of 0 to 5000),

A and B each independently represent an alkylene group containing 1 to 5 carbon atoms and optionally having a substituent,

p and q each independently represent an integer of 0 to 4, and

a and b each independently represent an integer of 0 to 10.

**6.** The thermoplastic resin according to claim 5, which comprises a constituent unit derived from any one of, at least, BPEF, BNE, BNEF, and DPBHBNA.

**7.** The thermoplastic resin according to any one of claims 1 to 6, which further comprises a constituent unit derived from at least one monomer selected from the following monomer group:

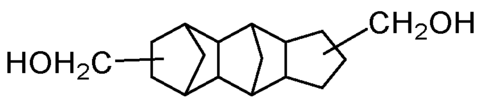

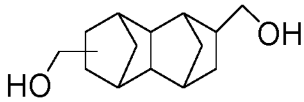

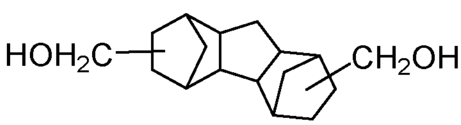

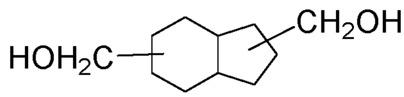

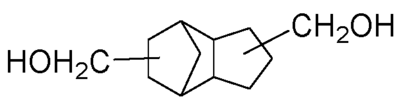

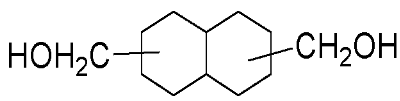

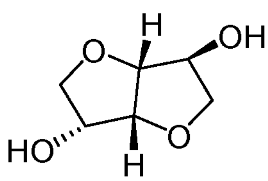

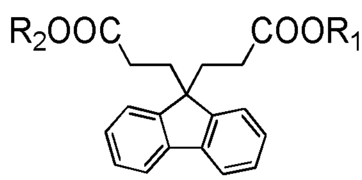

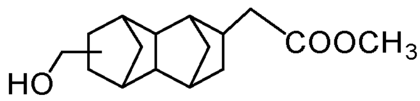 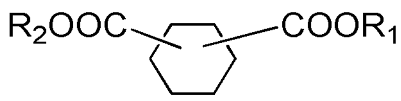

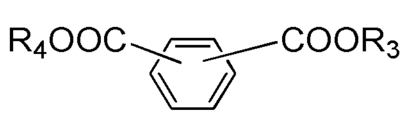 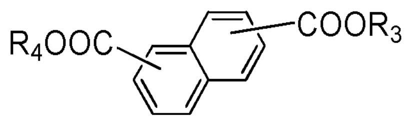

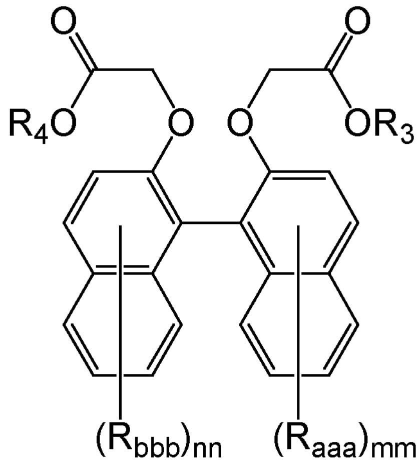

wherein, in the formulae, $R_1$ and $R_2$ each independently represent a hydrogen atom, a methyl group or an ethyl group, and $R_3$ and $R_4$ each independently represent a hydrogen atom, a methyl group, an ethyl group, or alkylene glycol containing 2 to 5 carbon atoms; and $R_{aaa}$ and $R_{bbb}$ each independently represent a hydrogen atom, a halogen atom, an alkyl group containing 1 to 20 carbon atoms and optionally having a substituent, an alkoxyl group containing 1 to 20 carbon atoms and optionally having a substituent, a cycloalkyl group containing 5 to 20 carbon atoms and optionally having a substituent, a cycloalkoxyl group containing 5 to 20 carbon atoms and optionally having a substituent, an aryl group containing 6 to 20 carbon atoms and optionally having a substituent, a heteroaryl group containing 6 to 20 carbon atoms and optionally having a substituent, which comprises one or more heterocyclic atoms selected from O, N and S, an aryloxy group containing 6 to 20 carbon atoms and optionally having a substituent, and $-C=C-R_h$, and mm and nn each independently represent an integer of 0 to 6.

8. The thermoplastic resin according to any one of claims 1 to 7, which has a polystyrene-converted weight average molecular weight (Mw) of 10,000 to 200,000.

9. The thermoplastic resin according to any one of claims 1 to 8, which has a refractive index (nD) of 1.64 to 1.70.

10. The thermoplastic resin according to any one of claims 1 to 9, which has an Abbe number (v) of 15.0 to 26.0.

11. The thermoplastic resin according to any one of claims 1 to 10, which has a glass transition temperature of 130°C to 180°C.

12. A thermoplastic resin composition, comprising a modifier represented by the following general formula (1) and a thermoplastic resin:

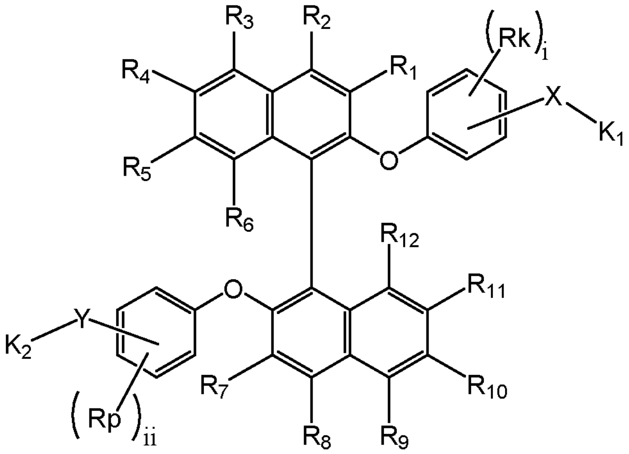

(1)

wherein

$R_1$ to $R_{12}$, Rk, and Rp each independently represent a hydrogen atom, a fluorine atom, a chlorine atom, a bromine atom, an iodine atom, a cycloalkyl group containing 5 to 20 carbon atoms, a cycloalkoxyl group containing 5 to 20 carbon atoms, an aryl group containing 6 to 20 carbon atoms, a linear or branched alkyl group containing 1 to 10 carbon atoms, an alkenyl group containing 2 to 10 carbon atoms, an alkoxy group containing 1 to 10 carbon atoms, a heteroaryl group containing 6 to 20 carbon atoms, which comprises one or more heterocyclic atoms selected from O, N and S, or an aralkyl group containing 7 to 20 carbon atoms, and

X and Y represent a single bond or an alkylene group containing 1 to 5 carbon atoms, i and ii each independently represent an integer of 0 to 4, and $K_1$ and $K_2$ each independently represent -OH, -COOH, or - COORq, wherein Rq represents an alkyl group containing 1 to 5 carbon atoms.

**13.** An optical member, comprising the thermoplastic resin according to any one of claims 1 to 11 or the thermoplastic resin composition according to claim 12.

**14.** An optical lens, comprising the thermoplastic resin according to any one of claims 1 to 11 or the thermoplastic resin composition according to claim 12.

**15.** An optical film, comprising the thermoplastic resin according to any one of claims 1 to 11 or the thermoplastic resin composition according to claim 12.

**INTERNATIONAL SEARCH REPORT**

International application No. **PCT/JP2022/023882**

**A. CLASSIFICATION OF SUBJECT MATTER**

***C08G 64/02***(2006.01)i; ***C08G 85/00***(2006.01)i; ***C08K 5/06***(2006.01)i; ***C08L 101/00***(2006.01)i; ***C08G 63/66***(2006.01)i; ***G02B 1/04***(2006.01)i
FI: C08G64/02; C08G63/66; C08L101/00; C08K5/06; C08G85/00; G02B1/04

According to International Patent Classification (IPC) or to both national classification and IPC

**B. FIELDS SEARCHED**

Minimum documentation searched (classification system followed by classification symbols)

C08G64/02; C08G85/00; C08K5/06; C08L101/00; C08G63/66; G02B1/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 6-256259 A (IMAI, Yoshio) 13 September 1994 (1994-09-13) paragraph [0009], examples 9-14 | 1, 4, 8 |
| A | CN 104629362 A (NINGBO INSTITUTE OF MATERIALS TECHNOLOGY AND ENGINEERING, CHINESE ACADEMY OF SCIENCES) 20 May 2015 (2015-05-20) entire text | 1-15 |
| A | CN 102643544 A (NINGBO INSTITUTE OF MATERIAL TECHNOLOGY AND ENGINEERING, CHINESE ACADEMY OF SCIENCES) 22 August 2012 (2012-08-22) entire text | 1-15 |
| P, A | KR 10-2021-0128615 A (NIC LAB CO., LTD.) 27 October 2021 (2021-10-27) entire text | 1-15 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 August 2022** | **16 August 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2022/023882**

**Box No. III Observations where unity of invention is lacking (Continuation of item 3 of first sheet)**

This International Searching Authority found multiple inventions in this international application, as follows:

(Invention 1) Claims 1-11 and 13-15

Document 1 (paragraph [0009], examples 9-14) discloses a polyamide (corresponding to the thermoplastic resin in the present application) having a monomer backbone of 2,2'-di(p-carboxyphenoxy)-1,1'-binaphthyl, and thus the invention in claim 1 cannot be said to have a special technical feature.

The inventions in claims 2-11 and 13-15 are the inventions that are considered to be efficient to examine the same together with the invention that is the subject of the examination on the basis of the special technical feature, and thus are included in invention 1.

(Invention 2) Claim 12

The invention in claim 12 and claim 1 classified as invention 1 share the technical feature of being "represented by general formula (1)". However, the technical feature cannot be said to be a special technical feature in light of the disclosures in document 1. Moreover, there are no other same or corresponding special technical features between claim 12 and claim 1 classified as invention 1. Furthermore, claim 12 is not dependent on claim 1. In addition, claim 12 is not substantially identical to or similarly closely related to any of the claims classified as invention 1.

Accordingly, the invention in claim 12 is classified as invention 2.

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

Form PCT/ISA/210 (continuation of first sheet) (January 2015)

**INTERNATIONAL SEARCH REPORT**
**Information on patent family members**

International application No.
**PCT/JP2022/023882**

| Patent document cited in search report | | | Publication date (day/month/year) | Patent family member(s) | Publication date (day/month/year) |
|---|---|---|---|---|---|
| JP | 6-256259 | A | 13 September 1994 | (Family: none) | |
| CN | 104629362 | A | 20 May 2015 | (Family: none) | |
| CN | 102643544 | A | 22 August 2012 | (Family: none) | |
| KR | 10-2021-0128615 | A | 27 October 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2018002893 A
- JP 2018002894 A
- JP 2018002895 A
- JP 2018059074 A
- WO 2017078073 A
- WO 2014073496 A

### Non-patent literature cited in the description

- *Adv. Synth. Catal.,* 2004, vol. 346, 195-198